# EUROPEAN PATENT SPECIFICATION

(11) **EP 1 623 859 B1**
(45) Date of publication and mention of the grant of the patent: **21.04.2010**
(21) Application number: 04729529.0
(22) Date of filing: 26.04.2004
(51) Int. Cl.: B60H 1/22

(54) **AIR HEATER UNIT FOR MOTOR VEHICLE AND AIR HEATER SYSTEM FOR MOTOR VEHICLE**
LUFTHEIZUNGSEINHEIT FÜR KRAFTFAHRZEUGE UND LUFTHEIZUNGSSYSTEM FÜR KRAFTFAHRZEUGE
RECHAUFFEUR D'AIR ET SYSTEME DE RECHAUFFAGE D'AIR POUR VEHICULE A MOTEUR

(30) Priority: 25.04.2003 JP 2003122395; 27.08.2003 JP 2003209114
(43) Date of publication of application: 08.02.2006
(73) Proprietor: NGK Spark Plug Co., Ltd., Nagoya-shi, Aichi 467-8525 (JP)
(72) Inventor: MURAMATSU, Seigo, c/o NGK SPARK PLUG CO., LTD., Nagoya-shi, Aichi 467- 8525 (JP); INAGAKI, Takahito, c/o NGK SPARK PLUG CO., LTD., Nagoya-shi, Aichi 467- 8525 (JP); ABE, Toshihiro, c/o NGK SPARK PLUG CO., LTD., Nagoya-shi, Aichi 467- 8525 (JP)
(74) Representative: Zimmermann, Gerd Heinrich
(86) International application number: PCT/JP2004/006009
(87) International publication number: WO 2004/108450

(56) References cited:
- WO-A-02/057100
- FR-A- 2 806 967
- JP-A- 9 245 939
- JP-A- 10 309 935
- JP-A- 11 202 680
- US-A- 5 229 579

## Description

### TECHNICAL FIELD

The present invention relates to an air heater unit for a vehicle and an air heater system for a vehicle.

### BACKGROUND ART

Various types of air heater units for vehicles have conventionally been proposed (for example, see Patent Document 1, Patent Document 2, Patent Document 3, and Patent Document 4). Each of these air heater units for vehicles is provided with an electrothermal heating element (heater element) and placed in for example an air intake path of an internal combustion engine to heat intake air.
Patent Document 1: Japanese unexamined patent publication No. H07(1995)-217508
Patent Document 2: Japanese unexamined patent publication No. H09(1997)-245939
Patent Document 3: Japanese unexamined patent publication No. 2000-257518
Patent Document 4: Japanese unexamined patent publication No. H09(1997)-296758

Meanwhile, there has been disclosed a manner of ON-OFF switching the energization to the electrothermal heating element by use of a relay switch in each of the above air heater units for vehicles. Thus, the total number of components constituting an air heater system for a vehicle including the air heater unit for a vehicle would be increased and also a large space for harnesses connecting those components would be needed. Further, a large current of the order of 100A is used in the vehicle air heater, so that repeated ON-OFF switching may cause meltdown of a relay contact.

The relay switch is slow in ON-OFF switching and the life of the relay contact would expire at for example about hundred thousand switching operations. It therefore would be practically difficult in terms of durability and reliability to regulate the heating temperature by ON-OFF switching the energization of a single electrothermal heating element for a short time. In Patent documents 2 and 3, accordingly, a plurality of electrothermal heating elements which can individually be ON-OFF switched is used for regulating the heating temperature of intake air. The air heater unit for a vehicle using such relay switch could not provide easy energization control of the electrothermal heating element.

Patent document 4, on the other hand, discloses that a semiconductor switch may be used in stead of the relay switch to perform ON-OFF switching. In the case where the semiconductor switch is used in this way, a simplified construction and improved reliability and durability can be expected as compared with the case where the relay switch is used. Further, Patent document 4 teaches that current to an intake preheating device (air heater) may be controlled by PWM control.

For appropriately performing control, such as the PWM control, of electric power (current) to be applied to the electrothermal heating element of the air heater, it is preferable to execute the control by detecting the current flowing in the electrothermal heating element of the air heater. In general, the electrothermal heating element of the air heater is of low resistance and a large current of the order of 100A is applied from a battery that produces around 12 volts to the electrothermal heating element, thereby causing the electrothermal heating element to generate heat. When an additional resistance is inserted to detect the current flowing in the electrothermal heating element of the air heater, accordingly, some defects may arise; e.g., voltage and current to be applied to the electrothermal heating element is largely reduced. The insertion of such additional resistance would also lead to an increase in size of the air heater system. Consequently, it would be unpractical that the additional resistance is inserted in the above conventional air heater systems for vehicles in order to detect the current flowing in the electrothermal heating element of the air heater.

Another electric heating system for a motor vehicle is known from WO 02/057 100 A2, which is considered as the closest prior art.

The present invention has been made to solve at least one of the above problems and has a purpose to provide an air heater unit for a vehicle and an air heater system for a vehicle, enabling easy control of energization to an air heater.

### DISCLOSURE OF INVENTION

An air heater system for a vehicle according to the first invention made to achieve the above purpose is An air heater system for a vehicle, the system comprising: an air heater having an electrothermal heating element; and a semiconductor switch connected to the electrothermal heating element in series for controlling energization to the electrothermal heating element, the semiconductor switch being a semiconductor switch having a current detecting function provided with a terminal for current detection to detect a current which flows in the electrothermal heating element, wherein the semiconductor switch connected to the electrothermal heating element in series is used to control the energization to this electrothermal heating element. Therefore, the air heater system of the invention can provide a simplified structure, improved reliability and durability, and a low cost as compared with a conventional air heater system using a relay switch to perform the ON-OFF switching of an air heater. Further, the air heater system of the invention using the semiconductor switch can easily perform energization control (e.g., ON-OFF control, PWM control, and so on) of the air heater. For example, the semiconductor switch connected to the electrothermal heating element in series is turned ON/OFF by a control device (e.g., ECU), enabling easy control of energization to the electrothermal heating element. Using of the semiconductor switch makes it possible to perform ON-OFF switching of energization to the electrothermal heating element at a faster rate as compared with the relay switch. Accordingly, fine or accurate energization control of the electrothermal heating element can be achieved.

Further, in the air heater system of the invention, the semiconductor switch provided with the current detecting function for detecting current flowing in the electrothermal heating element is used. Accordingly, it is possible to detect the current flowing in the electrothermal heating element of the air heater by utilizing a current detection terminal of the semiconductor switch provided with the current detecting function. This makes it possible to, for example, control electric power to be applied to the electrothermal heating element and check the air heater (electrothermal heating element) for normal operation.

It is to be noted that the semiconductor switch may include for example MOSFET, IGBT, GTO, thyristor, or the like. The mounting position of such semiconductor switch is not limited in particular. For instance, the semiconductor switch or a board on which the semiconductor switch is mounted may be fixed to the air heater in integral relation. Alternatively, the semiconductor switch or the board on which the semiconductor switch is mounted may be attached to for example a vehicle body in separate relation.

As a control system using the semiconductor switch, preferably, the PWM control is performed so as to supply a predetermined amount of electric power to the air heater. The PWM control enables appropriate temperature control and electric power control of the air heater; for example, the duty ratio is controlled to correct variations in battery voltage, thereby making the amount of electric power supply to the air heater constant. Especially, by using the semiconductor switch, it is possible to appropriately set a repetition frequency in the PWM control according to the size of an intake pipe, flow rate of the intake air, position of the air heater, or other conditions, and it is possible to minimize variations of temperature of the electrothermal heating element which may be caused by the ON-OFF switching and keep the heating temperature substantially constant.

In an internal combustion engine, a heating mode appropriate for an operating condition is requested. To be concrete, for starting the internal combustion engine, the air heater is energized for a predetermined time prior to cranking, thereby heating the intake air (hereinafter, referred to as preheating). The internal combustion engine is pre-heated by the intake air heated in this way, so that the startability of the internal combustion engine can be enhanced. Further, after the start of the internal combustion engine, the afterheating is performed according to the operating condition. The afterheating includes heating of the intake air during idling and heating of the intake air during running. During idling, preferably, the intake-air heating is kept down in order to reduce load on a battery. During running, on the other hand, the intake-air heating has to be built up according to an increase in intake air quantity associated with an increase of engine revolutions.

On the other hand, controlling of the duty ratio can also provide the heating mode appropriate for each operating condition of the internal combustion engine. Thus, the energization control can be performed with high accuracy according to the operating condition, the number of parts can be reduced, achieving savings in space, as compared with the conventional case using a plurality of electrothermal heating elements and relay switches for control of heating.

The air heater system for a vehicle according to the first invention further comprises resistance control means for controlling a resistance value of the electrothermal heating element based on output corresponding to the current which flows in the electrothermal heating element detected through the current detection terminal of the semiconductor switch.

In the air heater system for a vehicle of the invention, the resistance value of the electrothermal heating element is controlled based on the output corresponding to the current flowing in the electrothermal heating element. Specifically, for example, the current flowing in the electrothermal heating element and the voltage (battery voltage) to be applied to the electrothermal heating element are detected. Based on these values, the resistance value of the electrothermal heating element is calculated. The supply electric power to the electrothermal heating element is controlled so that this resistance value becomes the predetermined value. The resistance value of the electrothermal heating element and the temperature thereof are in a predetermined corresponding relation. Such control of the resistance value of the electrothermal heating element to the predetermined value enables the control of the temperature of the electrothermal heating element to the predetermined temperature. In particular, the resistance value of the electrothermal heating element made of a material having a large resistance coefficient can be controlled well.

Further, in the air heater system for a vehicle according to any one of the above inventions, preferably, further comprises failure detection means for detecting a failure of the electrothermal heating element by detecting a resistance value of the electrothermal heating element based on output corresponding to the current which flows in the electrothermal heating element detected through the current detection terminal of the semiconductor switch.

For environmental protection, there has recently been proposed a technique for returning unburned gas that flows out of an internal combustion engine to an air-intake side, burning the gas there, in order to prevent discharge of the unburned gas out of a vehicle. Further, there has also been proposed another technique (EGR) for returning part of exhaust air having increased in temperature to an air-intake side to enhance thermal efficiency of an internal combustion engine. However, the returning of unburned gas or exhaust air to the air-intake side may cause a problem that contaminants in the unburned gas or exhaust gas adhere to the electrothermal heating element of the air heater, decreasing the resistance value of the electrothermal heating element, further leading to a short circuit in the electrothermal heating element. On the other hand, the above series circuit may be broken if excessive electric power load is applied to the series circuit provided between the electrothermal heating element and the semiconductor switch.

In the air heater system of the invention, on the other hand, the resistance value of the electrothermal heating element is detected based on the output corresponding to the current flowing in the electrothermal heating element. For instance, the current flowing in the electrothermal heating element and the voltage which is applied to the electrothermal heating element (battery voltage) are detected to determine the resistance value of the electrothermal heating element. Then, the detected resistance value is compared with a reference resistance lower limit (e.g., "Initial resistance value of the electrothermal heating element" x 80%). If the detected resistance value is lower than the reference resistance lower limit (a failure in the electrothermal heating element), it can be determined that the electrothermal heating element is soiled. The soiled condition of the electrothermal heating element of the air heater can thus be checked. If a warning device or the like for giving a warning if the detected resistance value is lower than the reference resistance lower limit is additionally provided, it is possible to prompt any countermeasure for preventing a short circuit and others. In comparison with the reference resistance upper limit, if the detected resistance value is larger than the reference resistance upper limit ("Initial resistance value" of the electrothermal heating element x 120%), a short circuit of the electrothermal heating element can be detected and a warning of the failure of the air heater system can be given to a driver.

In the air heater system for a vehicle according to one of the above inventions, the air heater includes a frame which holds the electrothermal heating element, and the semiconductor switch is fixed to the frame.

In the air heater system for a vehicle of the invention, the semiconductor switch is fixed to the frame of the air heater. Therefore, there is no need to separately provide a place for mounting the semiconductor switch, thus achieving savings in space. Further, an assembling work is more efficient as compared with in the case where the semiconductor switch is separately mounted on a vehicle.

Further, in the air heater system for a vehicle according to the above invention, the electrothermal heating element has such a temperature converging property that a temperature rises and then converges to a predetermined convergence temperature when the electrothermal heating element is continuously supplied with maximum allowable voltage, the frame includes a resinous part made of resin, and the resinous part is arranged in such a place that the resinous part has rigidity adequate for actual use even when the electrothermal heating element is at the convergence temperature.

In the air heater system for a vehicle of the invention, the electrothermal heating element has such a temperature converging property that the temperature of the electrothermal heating element converges to a predetermined convergence temperature when the electrothermal heating element is continuously supplied with maximum allowable voltage. In the air heater system for a vehicle of the invention, in other words, the temperature of the electrothermal heating element will not come to an overtemperature condition exceeding the convergence temperature as long as the maximum allowable voltage or less is applied to the electrothermal heating element.

In the air heater system for a vehicle of the invention, the frame includes the resinous part which is arranged in such a place that the resinous part remains adequately rigid for actual use even when the electrothermal heating element is at the convergence temperature. Accordingly, the air heater system for a vehicle of the invention may cause no problem that the resinous part of the frame is softened or deformed into an unusable state, as long as the maximum allowable voltage or less is applied to the electrothermal heating element.

In the air heater system for a vehicle of the invention, the frame can be reduced in weight by an amount of a metallic part substituted by the resinous part as compared with the conventional air heater system for a vehicle with the frame entirely made of metal. Thus, weight reduction of the air heater system can be achieved.

The heating element having the temperature converging property may include for example a heating element comprising, as at least a part thereof, a controlled heating part made of a material having a high resistance temperature coefficient. To be more specific, the heating element is made of an iron-chrome alloy having a low content of chrome, an Ni-base alloy, or the like. For example, the heating element may include ones of which a temperature converges to the above convergence temperature in a low temperature range of e.g. 250°C to 350°C.

As the resin making the resinous part, any resin may be used if only having adequate rigidity even where the temperature of the electrothermal heating element reaches the convergence temperature in view of the convergence temperature of the electrothermal heating element and placement and a heat dispersion property of the resinous part. Preferably, resins having high heat resistance are used. For example, the resinous part of the frame may be made of a material selected from among polyimide (PI), nylon-66, polyphenylene sulfide (PPS), polyethylene terephthalate (PET), fluororesins such as PTFE, and silicone resins and others. Further, the resinous part may be made of a material including a reinforcing material such as glass fillers in addition to the above resins, thereby improving heat resistance.

Alternatively, in the air heater system for a vehicle according to the above invention, preferably, the electrothermal heating element has such a temperature converging property that a temperature rises and then converges to a predetermined convergence temperature when the electrothermal heating element is continuously supplied with maximum allowable voltage, the frame includes a resinous part made of resin having a predetermined deflection temperature under load, and the resinous part is arranged in such a place that the temperature of the resinous part remains below the deflection temperature under load even when the electrothermal heating element is at the convergence temperature.

In the air heater system for a vehicle of the invention, the electrothermal heating element has the temperature converging property that the temperature of the electrothermal heating element converges to a predetermined convergence temperature when the electrothermal heating element is continuously applied with maximum allowable voltage. Accordingly, in the air heater system for a vehicle of the invention, the temperature of the electrothermal heating element will not come to an overtemperature condition exceeding the convergence temperature as long as the maximum allowable voltage or less is applied to the electrothermal heating element.

In the air heater system for a vehicle of the invention, the frame includes the resinous part which is arranged in such a place that the temperature of the resinous part remains below the deflection temperature under load even when the electrothermal heating element is at the convergence temperature. Accordingly, the resinous part of the frame can be prevented from becoming softened and deformed as long as the maximum allowable voltage or less is applied to the electrothermal heating element.

In the air heater system for a vehicle of the invention, the frame can be reduced in weight by an amount of a metallic part substituted by the resinous part as compared with the conventional air heater system for a vehicle with the frame entirely made of metal. Thus, weight reduction of the air heater system can be achieved.

It is to be noted that the "deflection temperature of resin under load" means the temperature which is determined by calculation using an edgewise method defined in JIS K 7191 (1996). Specifically, a test piece (an edgewise test piece) made of resin, having a predetermined dimension and a rectangular section, is immersed in a bath filled with silicone oil; and, under the condition that a load of 1.82 MPa is applied to the test piece, the bath temperature is increased at a uniform rate of 2°C/min until the deflection amount of the center of a loaded part of the test piece reaches a standard deflection amount of 0.25 mm. Such increased temperature is referred to as the deflection temperature of the resin under load.

An air heater system for a vehicle according to the second invention is an air heater system for a vehicle comprising: an air heater having an electrothermal heating element; and a semiconductor switch connected to the electrothermal heating element in series for controlling energization to the electrothermal heating element, the air heater having a frame which holds the electrothermal heating element, and the semiconductor switch being fixed to the frame.

In the air heater system of the invention, the semiconductor switch is fixed to the frame of the air heater. Therefore, there is no need to separately provide a space for mounting the semiconductor switch, achieving savings in space. Further, an assembling work is more efficient as compared with in the case where the semiconductor switch is separately mounted on a vehicle.

Further, in the air heater system for a vehicle according to the second invention, preferably, the semiconductor switch has an overtemperature protecting function for interrupting current passing through the semiconductor switch when a temperature thereof becomes a shut-off temperature, and the semiconductor switch is fixed to the frame in such a place that the temperature of the semiconductor switch becomes the shut-off temperature when the temperature of the electrothermal heating element reaches an excessive temperature.

In the air heater system for a vehicle of the invention, the semiconductor switch includes the overtemperature protecting function to interrupt the current passing through the semiconductor switch when the temperature thereof reaches the shut-off temperature. This semiconductor switch is placed in such a position that the temperature thereof becomes the shut-off temperature when the temperature of the electrothermal heating element reaches the excessive temperature. Accordingly, the temperature of the semiconductor switch becomes the shut-off temperature even in the case where the temperature of the electrothermal heating element reaches the excessive temperature as well as the case where the shut-off temperature of the semiconductor switch is reached by self-heating. Then, the semiconductor switch is turned OFF by the overtemperature protecting function. This makes it possible to interrupt the energization to the electrothermal heating element, thereby preventing the temperature of the electrothermal heating element from rising over the excessive temperature. The overtemperature protecting function of the semiconductor switch can be used for protection of the electrothermal heating element and the frame from an excessive rise of temperature as well as protection of the semiconductor switch itself from an excessive rise of temperature.

The shut-off temperature is a temperature previously set for the semiconductor switch and set so as to interrupt the current passing through the semiconductor switch as soon as the temperature of the semiconductor switch reaches the set temperature. To be concrete, this shut-off temperature can be previously set as e.g. a junction temperature Tj of the semiconductor switch. The "excessive temperature" means a preset temperature determined according to materials and shapes of the electrothermal heating element, which is set to a temperature at which the electrothermal heating element and the frame resist heat damage. Accordingly, the air heater system for a vehicle of the invention can prevent the electrothermal heating element and the frame from becoming deteriorated or melted down due to excessive rise of temperature of the electrothermal heating element.

The semiconductor switch having the overtemperature protecting function may include an MOSFET, a semiconductor switch circuit having an overtemperature protecting circuit, and the like. The semiconductor switch circuit having the overtemperature protecting function may include PROFET®, No. BTS550P made by Infineon Technologies, AG.

Further, in the air heater system for a vehicle according to the above invention, preferably, the frame of the air heater includes a metallic part, and the semiconductor switch is fixed to the metallic part of the frame directly or through an electrical insulator.

In the air heater system for a vehicle of the invention, the semiconductor switch is fixed to the metallic part of the frame of the air heater directly or via the electrical insulator. Thus, the temperature of the semiconductor switch increases as soon as the temperature of the electrothermal heating element of the air heater increases. When the temperature of the electrothermal heating element of the air heater reaches the excessive temperature, the temperature of the semiconductor switch becomes the shut-off temperature rapidly. Accordingly, the semiconductor switch is turned OFF by the overtemperature protecting function thereof. The frame of the air heater may be made of metal entirely or a combination of metal and other different materials such as resin.

Alternatively, in the air heater system for a vehicle according to the second invention, preferably, the semiconductor switch includes an overtemperature signal output terminal which outputs an overtemperature warning signal when the temperature of the semiconductor switch becomes a warning temperature, the semiconductor switch is fixed to the frame in such a place that the temperature of the semiconductor switch becomes the warning temperature when the temperature of the electrothermal heating element reaches the excessive temperature, and the air heater system includes overtemperature protecting means for interrupting the current passing through the semiconductor switch in response to the overtemperature warning signal from the overtemperature signal outputting terminal of the semiconductor switch.

In the air heater system for a vehicle of the invention, the semiconductor switch has the overtemperature signal output terminal which outputs an overtemperature warning signal when the temperature of the semiconductor switch reaches the warning temperature. This semiconductor switch is placed in such a position that the temperature thereof becomes the warning temperature when the temperature of the electrothermal heating element reaches the excessive temperature. Accordingly, the temperature of the semiconductor switch becomes the warning temperature when the temperature of the electrothermal heating element reaches the excessive temperature.

The air heater system for a vehicle of the invention further includes the overtemperature protecting means for interrupting the current passing through the semiconductor switch based on the overtemperature warning signal from the overtemperature signal output terminal. Therefore, the temperature of the semiconductor switch becomes the warning temperature when the temperature of the electrothermal heating element reaches the excessive temperature as well as in the case where the warning temperature of the semiconductor switch is reached by self-heating. Thus, the semiconductor switch is turned OFF through the overtemperature protecting means, thereby enabling the interruption of energization to the electrothermal heating element. This makes it possible to prevent the temperature of the semiconductor switch from rising over the warning temperature for a long term, further to prevent the temperature of the electrothermal heating element from rising over the excessive temperature for a long term.

The "warning temperature" means a preset temperature for the semiconductor switch. The overtemperature signal output terminal outputs the overtemperature warning signal when the temperature of the semiconductor switch reaches this preset temperature. Specifically, this warning temperature can be previously set as the junction temperature Tj of the semiconductor switch or the like. The "excessive temperature" is a preset temperature determined according to materials and shapes of the electrothermal heating element, which is set to a temperature at which the electrothermal heating element and the frame resist heat damage.

The semiconductor switch having the overtemperature signal output terminal may include IGBT, No. MG200Q2YS60A, made by Toshiba Semiconductor Co., Ltd.

Further, in the air heater system for a vehicle according to the above invention, preferably, the frame of the air heater includes a metallic part, and the semiconductor switch is fixed to the metallic part of the frame directly or through an electrical insulator.

In the air heater system for a vehicle of the invention, the semiconductor switch is fixed to the metallic part of the frame of the air heater directly or via the electrical insulator. Thus, the temperature of the semiconductor switch increases as soon as the temperature of the electrothermal heating element of the air heater increases.

When the temperature of the electrothermal heating element of the air heater reaches the excessive temperature, the temperature of the semiconductor switch becomes the warning temperature rapidly. Accordingly, the overtemperature warning signal can be output from the overtemperature signal outputting terminal. This makes it possible to interrupt the energization to the electrothermal heating element, thereby rapidly preventing the temperature of the electrothermal heating element from rising over the excessive temperature, or, rapidly operating for any countermeasure to the excessive rise of temperature of the electrothermal heating element. The frame of the air heater may be made of metal entirely or a combination of metal and other different materials such as resin.

Further, in the air heater system for a vehicle according to the second invention, preferably, the electrothermal heating element has such a temperature converging property that a temperature rises and then converges to a predetermined convergence temperature when the electrothermal heating element is continuously supplied with maximum allowable voltage, the frame includes a resinous part made of resin, and the resinous part is arranged in such a place that the resinous part has rigidity adequate for actual use even when the electrothermal heating element is at the convergence temperature.

In the air heater system for a vehicle of the invention, the electrothermal heating element has the temperature converging property that the temperature of the electrothermal heating element converges to a predetermined convergence temperature when the electrothermal heating element is continuously applied with maximum allowable voltage. In other words, in the air heater system for a vehicle of the invention, the temperature of the electrothermal heating element will not come to an overtemperature condition exceeding the convergence temperature as long as the maximum allowable voltage or less is applied to the electrothermal heating element.

In the air heater system for a vehicle of the invention, the frame includes the resinous part which is arranged in a place where the resinous part is adequately rigid for actual use even when the electrothermal heating element is at the convergence temperature. Accordingly, the air heater system for a vehicle of the invention may cause no problem that the resinous part of the frame is softened or deformed into an unusable state, as long as the maximum allowable voltage or less is applied to the electrothermal heating element.

In the air heater system for a vehicle of the invention, the frame can be reduced in weight by an amount of a metallic part substituted by the resinous part as compared with the conventional air heater system for a vehicle with the frame entirely made of metal. Thus, weight reduction of the air heater system can be achieved.

Alternatively, in the air heater system for a vehicle according to the second invention, preferably, the electrothermal heating element has such a temperature converging property that a temperature rises and then converges to a predetermined convergence temperature when the electrothermal heating element is continuously supplied with maximum allowable voltage, the frame includes a resinous part made of resin having a predetermined deflection temperature under load, and the resinous part is arranged in such a place that the temperature of the resinous part remains below the deflection temperature under load even when the electrothermal heating element is at the convergence temperature.

In the air heater system for a vehicle of the invention, the electrothermal heating element has the temperature converging property that the temperature of the electrothermal heating element converges to a predetermined convergence temperature when the electrothermal heating element is continuously applied with maximum allowable voltage. In other words, in the air heater system for a vehicle of the invention, the temperature of the electrothermal heating element will not come to an overtemperature condition exceeding the convergence temperature as long as the maximum allowable voltage or less is applied to the electrothermal heating element.

In the air heater system for a vehicle of the invention, the frame includes the resinous part which is arranged in such a place that the temperature of the resinous part remains below the deflection temperature under load even when the electrothermal heating element is at the convergence temperature. Accordingly, the resinous part of the frame can be prevented from becoming softened and deformed as long as the maximum allowable voltage or less is applied to the electrothermal heating element.

In the air heater system for a vehicle of the invention, the frame can be reduced in weight by an amount of a metallic part substituted by the resinous part as compared with the conventional air heater system for a vehicle with the frame entirely made of metal. Thus, weight reduction of the air heater system can be achieved.

An air heater unit for a vehicle according to the third invention is an air heater unit for a vehicle comprising: an air heater includes an electrothermal heating element and a frame which holds the electrothermal heating element, and a semiconductor switch fixed to the frame of the air heater and connected to the electrothermal heating element in series to control energization to the electrothermal heating element.

The air heater unit for a vehicle of the invention includes the semiconductor switch that is connected to the electrothermal heating element in series and able to control the energization to the electrothermal heating element. Using such air heater unit for a vehicle makes it possible to easily control the energization (e.g., ON-OFF control and PWM control) of the electrothermal heating element of the air heater. The semiconductor switch also allows the ON-OFF switching of energization to the electrothermal heating element at a faster rate as compared with the relay switch. Consequently, fine or accurate energization control of the electrothermal heating element can be achieved.

In the air heater unit for a vehicle of the invention, the semiconductor switch is fixed to the frame of the air heater. Therefore, there is no need to separately provide a place for mounting the semiconductor switch, achieving savings in space. Further, an assembling work is more efficient as compared with in the case where the semiconductor switch is separately mounted on a vehicle. The semiconductor switch may be fixed to the frame of the air heater or through a circuit board or the like.

Further, in the air heater unit for a vehicle according to the third invention, preferably, the semiconductor switch has an overtemperature protecting function for interrupting current passing through the semiconductor switch when a temperature thereof becomes a shut-off temperature, and the semiconductor switch is fixed to the frame in such a place that the temperature of the semiconductor switch becomes the shut-off temperature when the temperature of the electrothermal heating element reaches an excessive temperature.

In the air heater unit for a vehicle of the invention, the semiconductor switch includes the overtemperature protecting function to interrupt the current passing through the semiconductor switch when the temperature thereof becomes the shut-off temperature. This semiconductor switch is placed in such a position that the temperature thereof becomes the shut-off temperature when the temperature of the electrothermal heating element reaches the excessive temperature. Accordingly, the temperature of the semiconductor switch becomes the shut-off temperature even in the case where the temperature of the electrothermal heating element reaches the excessive temperature as well as the case where the semiconductor switch reaches the shut-off temperature by self-heating. Then, the semiconductor switch is turned OFF by the overtemperature protecting function. This makes it possible to interrupt the energization to the electrothermal heating element, thereby preventing the temperature of the electrothermal heating element from rising over the excessive temperature. The overtemperature protecting function of the semiconductor switch can also be used for protection of the electrothermal heating element and the frame from an excessive rise of temperature as well as protection of the semiconductor switch itself from an excessive rise of temperature.

Further, in the air heater unit for a vehicle according to the above invention, preferably, the frame of the air heater includes a metallic part, and the semiconductor switch is fixed to the metallic part of the frame directly or through an electrical insulator.

In the air heater unit for a vehicle of the invention, the semiconductor switch is fixed to the metallic part of the frame of the air heater directly or via the electrical insulator. Thus, the temperature of the semiconductor switch increases as soon as the temperature of the electrothermal heating element of the air heater increases. When the temperature of the electrothermal heating element of the air heater reaches the excessive temperature, the temperature of the semiconductor switch becomes the shut-off temperature rapidly. The semiconductor switch is turned OFF by the overtemperature protecting function thereof, thus preventing the temperature of the electrothermal heating element from rising over the excessive temperature. The frame of the air heater may be made of metal entirely or a combination of metal and other different materials such as resin.

Alternatively, in the air heater unit for a vehicle according to the third invention, preferably, the semiconductor switch includes an overtemperature signal output terminal which outputs an overtemperature warning signal when the temperature of the semiconductor switch becomes a warning temperature, and the semiconductor switch is fixed to the frame in such a place that the temperature of the semiconductor switch becomes the warning temperature when the temperature of the electrothermal heating element reaches the excessive temperature.

In the air heater unit for a vehicle of the invention, the semiconductor switch includes the overtemperature signal output terminal which outputs the overtemperature warning signal when the temperature of the semiconductor switch becomes the warning temperature. This semiconductor switch is placed in such a position that the temperature of the semiconductor switch becomes the warning temperature when the temperature of the electrothermal heating element reaches the excessive temperature. If the temperature of the electrothermal heating element reaches the excessive temperature, therefore, the temperature of the semiconductor switch becomes the warning temperature. Accordingly, it is possible to detect, through the overtemperature signal output terminal of the semiconductor switch, that the temperature of the semiconductor switch rises over the warning temperature by self-heating and further that the temperature of the electrothermal heating element reaches the excessive temperature.

This air heater unit for a vehicle of the invention can prevent the temperature of the semiconductor switch from rising over the warning temperature for a long term and also the temperature of the electrothermal heating element from rising over the excessive temperature for a long term. To be more specific, the control unit (e.g., ECU) monitors the output from the overtemperature signal output terminal of the semiconductor switch to interrupt the current passing through the semiconductor switch if the overtemperature warning signal is produced from the overtemperature signal output terminal. In this manner, the temperature of the semiconductor switch can be prevented from rising over the warning temperature for a long term and also the temperature of the electrothermal heating element can be prevented from rising over the excessive temperature for a long term.

Further, in the air heater unit for a vehicle according to the above invention, preferably, the frame of the air heater includes a metallic part, and the semiconductor switch is fixed to the metallic part of the frame directly or through an electrical insulator.

In the air heater unit for a vehicle of the invention, the semiconductor switch is fixed to the metallic part of the frame of the air heater directly or via the electrical insulator. As soon as the temperature of the electrothermal heating element of the air heater increases, accordingly, the temperature of the semiconductor switch increases. When the temperature of the electrothermal heating element of the air heater reaches the excessive temperature, therefore, the temperature of the semiconductor switch becomes the warning temperature. Thus, the overtemperature warning signal can be output from the overtemperature signal output terminal. This makes it possible to interrupt the energization to the electrothermal heating element, thereby rapidly operating for any countermeasure to the excessive rise of temperature of the electrothermal heating element. The frame of the air heater may be made of metal entirely or a combination of metal and other different materials such as resin.

Further, in the air heater unit for a vehicle according to the third invention, preferably, the electrothermal heating element has such a temperature converging property that a temperature rises and then converges to a predetermined convergence temperature when the electrothermal heating element is continuously supplied with maximum allowable voltage, the frame includes a resinous part made of resin, and the resinous part is arranged in such a place that the resinous part has rigidity adequate for actual use even when the electrothermal heating element is at the convergence temperature.

In the air heater unit for a vehicle of the invention, the electrothermal heating element has such a temperature converging property that a temperature converges to a predetermined convergence temperature when the electrothermal heating element is continuously supplied with a maximum allowable voltage. In other words, in the air heater unit for a vehicle of the invention, the temperature of the electrothermal heating element will not come to an overtemperature condition exceeding the convergence temperature as long as the maximum allowable voltage or less is applied to the electrothermal heating element.

In the air heater unit for a vehicle of the invention, the frame includes the resinous part which is arranged in such a place that the resinous part remains adequately rigid for actual use even when the electrothermal heating element is at the convergence temperature. Accordingly, the air heater unit for a vehicle of the invention may cause no problem that the resinous part of the frame is softened or deformed into an unusable state, as long as the maximum allowable voltage or less is applied to the electrothermal heating element.

In the air heater unit for a vehicle of the invention, the frame can be reduced in weight by an amount of a metallic part substituted by the resinous part as compared with the conventional air heater unit for a vehicle with the frame entirely made of metal. Thus, weight reduction of the air heater unit can be achieved

Alternatively, in the air heater unit for a vehicle according to the third invention, preferably, the electrothermal heating element has such a temperature converging property that a temperature rises and then converges to a predetermined convergence temperature when the electrothermal heating element is continuously supplied with maximum allowable voltage, the frame includes a resinous part made of resin having a predetermined deflection temperature under load, and the resinous part is arranged in such a place that the temperature of the resinous part remains below the deflection temperature under load even when the electrothermal heating element is at the convergence temperature.

In the air heater unit for a vehicle of the invention, the electrothermal heating element has such a temperature converging property that a temperature converges to a predetermined convergence temperature when the electrothermal heating element is continuously supplied with a maximum allowable voltage. In other words, in the air heater unit for a vehicle of the invention, the temperature of the electrothermal heating element will not come to an overtemperature condition exceeding the convergence temperature as long as the maximum allowable voltage or less is applied to the electrothermal heating element.

In the air heater unit for a vehicle of the invention, further, the frame includes the resinous part which is arranged in such a place that the temperature of the resinous part remains below the deflection temperature under load even when the electrothermal heating element is at the convergence temperature. Thus, the air heater unit for a vehicle of the invention may cause no problem that the resinous part of the frame is softened or deformed as long as the maximum allowable voltage or less is applied to the electrothermal heating element.

In the air heater unit for a vehicle of the invention, the frame can be reduced in weight by an amount of a metallic part substituted by the resinous part as compared with the conventional air heater unit for a vehicle with the frame entirely made of metal. Thus, weight reduction of the air heater unit can be achieved.

### BRIEF DESCRIPTION OF DRAWINGS

Fig. 1 is a view showing an air heater unit 100 for a vehicle in a preferred embodiment; (a) is a plan view and (b) is a side view thereof;
Fig. 2 is a view showing a semiconductor switch 110 of the air heater unit 100 for a vehicle in the embodiment; (a) is a plan view and (b) is a side view thereof;
Fig. 3 is an explanatory view to explain electric connection in the semiconductor switch 110 of the air heater unit 100 for a vehicle in the embodiment;
Fig. 4 is a circuit diagram of an air heater system 200 for a vehicle in the embodiment;
Fig. 5 is a flowchart showing a flow of an intake-air heating operation in the embodiment;
Fig. 6 is a circuit diagram of an air heater system 400 for a vehicle in a first modification of the embodiment;
Fig. 7 is a flowchart showing a flow of an intake-air heating operation in the first modification;
Fig. 8 is a view showing an air heater unit 500 for a vehicle in a second modification of the embodiment; (a) is a plan view and (b) is a side view; and
Fig. 9 is an explanatory view to explain electric connection in the semiconductor switch 110 of the air heater unit 500 for a vehicle in the second modification.

### BEST MODE FOR CARRYING OUT THE INVENTION

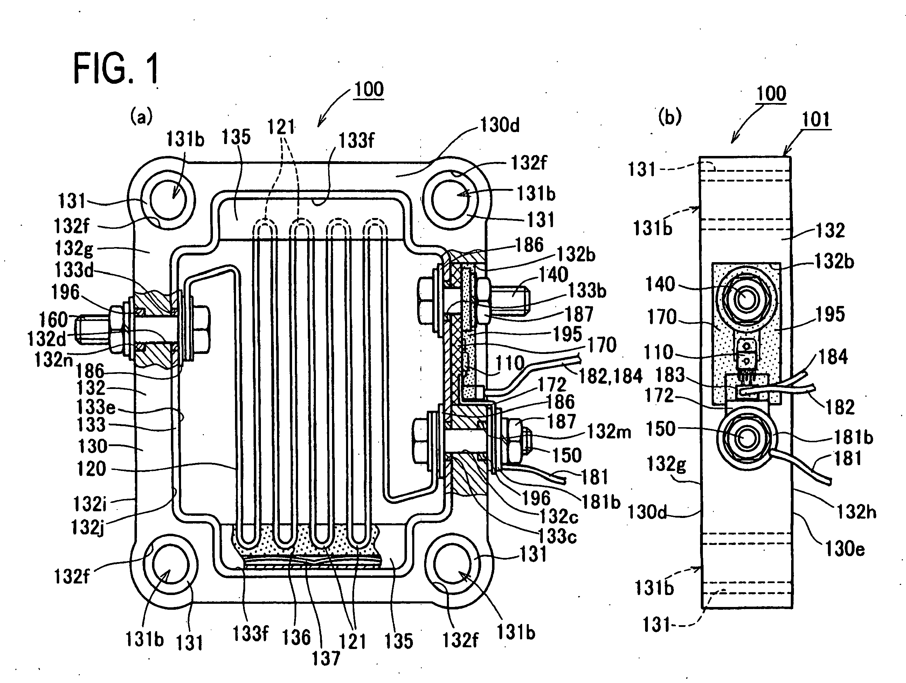

A detailed description of a preferred embodiment of an air heater unit for a vehicle and an air heater system for a vehicle of the present invention and modifications of the embodiment will now be given referring to Figs. 1 to 9.

An air heater unit 100 for a vehicle in the embodiment will be first explained referring to Figs. 1 to 5. Fig. 1 is a view showing the air heater unit 100 for a vehicle in the present embodiment; (a) is a plan view and (b) is a side view thereof. The air heater unit 100 for a vehicle has an air heater 101, a semiconductor switch 110, and a wiring board 170.

The air heater 101 includes an electrothermal heating element 120, a frame 130 which holds this heating element 120, and first, second, and third contact terminals 140, 150, and 160, each of which is fixed to the frame 130 and electrically connected to the heating element 120.

The frame 130 includes a resinous part 132 of substantially rectangular ring shape and a metallic part 133 arranged inside the resinous part 132. The resinous part 132 is made of PPS resin containing a predetermined amount of glass filler and is a resinous integrally-molded product formed in a substantially rectangular ring shape by injection molding. Formed at four corners of this resinous part 132 are four mounting holes 132f, each extending through the resinous part 132 to open at a front surface 132g and a back surface 132h. A metallic annular cylindrical collar 131 is fitted in each mounting hole 132f. The resinous part 132 is provided with a first through hole 132b of a rectangular cylindrical shape, and a second and third through holes 132c and 132d of a cylindrical shape, each extending through the resinous part 132 to open at an internal surface 132j and an external surface 132i. It is to be noted that a deflection temperature under load of the resinous part 132 (PPS) is about 260°C.

The metallic part 133 is made from a stripe-shaped aluminum base alloy formed into a substantially rectangular ring shape, which is fixed on the internal surface of the resinous part 132. This metallic part 133 is provided with a first insertion hole 133b of a cylindrical shape in a position to communicate with the first through hole 132b of the resinous part 132. Further, a second insertion hole 133c is provided in a position to communicate with the second through hole 132c of the resinous part 132 and to be coaxial therewith and a third insertion hole 133d is provided in a position to communicate with the third through hole 132d and to be coaxial therewith.

This metallic part 133 further has two recesses 133f oppositely disposed. Each of these two recesses 133f holds a metallic bracket 135 of a substantially U-shaped section orthogonal to a longitudinal direction (a right-and-left direction relative to Fig. 1). In this metallic bracket 135 (in each recess), an insulator 136 is provided and a plate spring 137 is interposed between the bracket 135 and the insulator 136. Thus, the insulator 136 is urged toward the inside of the frame 130 by the plate spring 137 and hence fixed in place by pressing curved portions 121 of the electrothermal heating element 120, and the electrothermal heating element 120 is held (fixed) in a sandwiched state between the two insulators 136. Further, the metallic bracket 135 is urged toward the outside of the frame 130 by the plate spring 137 and hence fixed in the recess 133f of the metallic portion 133.

The first contact terminal 140 is a metallic bolt which is inserted in the first insertion hole 133b of the metallic part 133 and the first through hole 132b of the resinous part 132, while the first contact terminal 104 is electrically insulated from the metallic part 133 through an insulation washer 186. The second contact terminal 150 is also a metallic bolt which is inserted in the second insertion hole 133c of the metallic part 133 and the second through hole 132c of the resinous part 132, while the second contact terminal 150 is electrically insulated from the metallic part 133 through an insulation washer 186. Similarly, the third contact terminal 160 is a metallic bolt which is inserted in the third insertion hole 133d of the metallic part 133 and the third through hole 132d of the resinous part 132, while the third contact terminal 160 is electrically insulated from the metallic part 133 through an insulation washer 186.

The electrothermal heating element 120 is a heating element formed of a meandering, stripe-shaped thin plate made of an iron-chrome alloy. The plurality of curved portions 121 are fitted in the insulator 136 so that the electrothermal heating element 120 is held in and thermally insulated from the frame 130. Further, the electrothermal heating element 120 is formed on either side with a cutout (not shown) in which the second and third contact terminals 150 and 160 are inserted respectively. In this way, the electrothermal heating element 120 is electrically connected to the second contact terminal 150 and the third contact terminal 160. It is to be noted that this electrothermal heating element 120 has a temperature converging property that the temperature of the heating element 120 rises and then converges to a predetermined convergence temperature when continuously applied with maximum allowable voltage. In the present embodiment, a resistance temperature coefficient of the electrothermal heating element 120 is R300/R20=1.3, and the convergence temperature is 300°C. R300 is the resistance temperature coefficient at 300°C and R20 is that at 20°C.

There is a space between the electrothermal heating element 120 and the resinous part 132 of the frame 130. Between them, there is further air, the insulator 136, and also the metallic part 133. Accordingly, the temperature of the resinous part 132 is low in general than that of the electrothermal heating element 120. In the present embodiment, the resinous part 132 is arranged so that its temperature remains below the deflection temperature under load (260°C) even when the electrothermal heating element 120 reaches the convergence temperature (300°C). Thus, the resinous part 132 of the frame 130 can have rigidity adequate for actual use without becoming softened and transformed even when the temperature of the electrothermal heating element 120 reaches the convergence temperature. As above, the resinous part 132 is provided in the frame 130 for weight saving thereof and also the resinous part 132 of the frame 130 is arranged to be usable (resistant to heat). Consequently, the frame 130 can be reduced in weight by an amount of a metallic part substituted by the resinous part 132 as compared with a conventional air heater unit for a vehicle with a frame entirely made of metal.

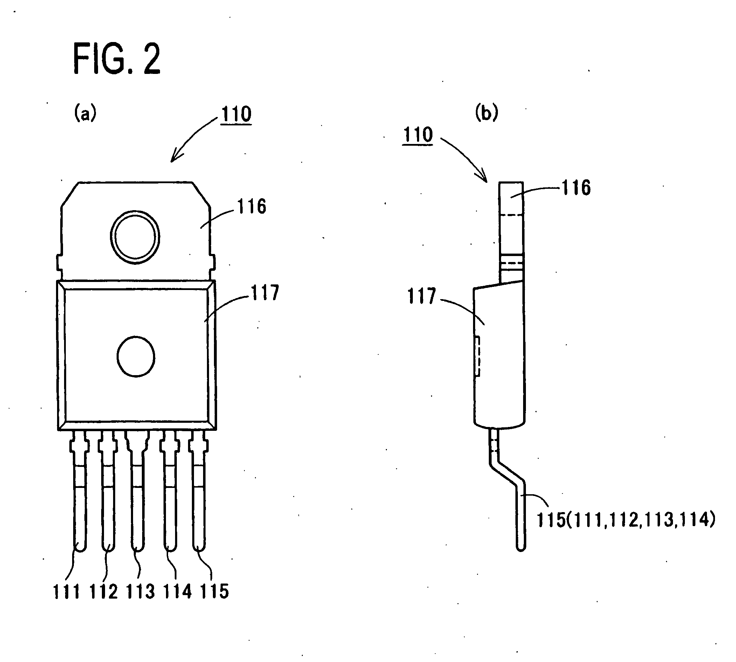

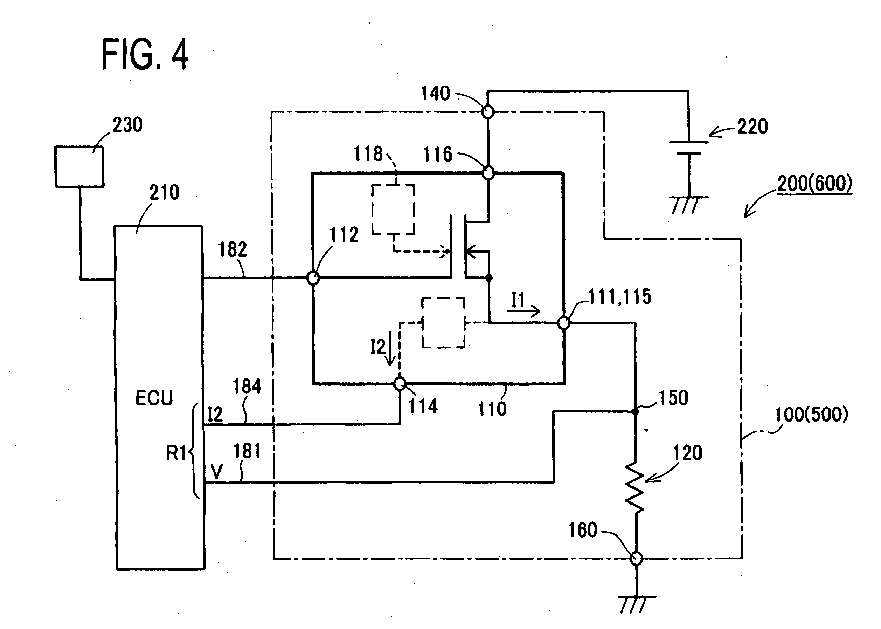

Fig. 2 is a view showing the semiconductor switch 110; (a) is a plan view and (b) is a side view thereof. In the present embodiment, used as the semiconductor switch 110 was PROFET^{®} No. BTS550P made by Infineon Technologies, AG. This semiconductor switch 110 has a basic configuration of MOSFET and is structured to output current I2 at a predetermined ratio (1/21000 in the present embodiment) to current I1 flowing between a drain and a source in the MOSFET (see Fig. 4).

Such semiconductor switch 110 includes a main body 117, a first connector pin 111 to a five connector pin 115 each connected to the main body 117, and a tab 116. The main body 117 has a switch circuit, a current detection circuit capable of detecting the current passing through the main body 117, and an overtemperature protecting circuit 118 (an overtemperature protecting function). The overtemperature protecting circuit 118 interrupts the current I1 flowing between the drain and the source when a junction temperature of the semiconductor switch 110 reaches a shut-off temperature. This makes it possible to suppress an excessive rise of temperature of the semiconductor switch 110. The shut-off temperature of the semiconductor switch 110 is set at 150°C. The third connector pin 113 and the tab 116, both of which are terminals for electric power input, are electrically connected to each other. The first and fifth connector pins 111 and 115 are terminals for electric power output. The second connector pin 112 is a terminal for input of an energization control signal (ON-OFF signal). The fourth connector pin 114 is a terminal for current detection.

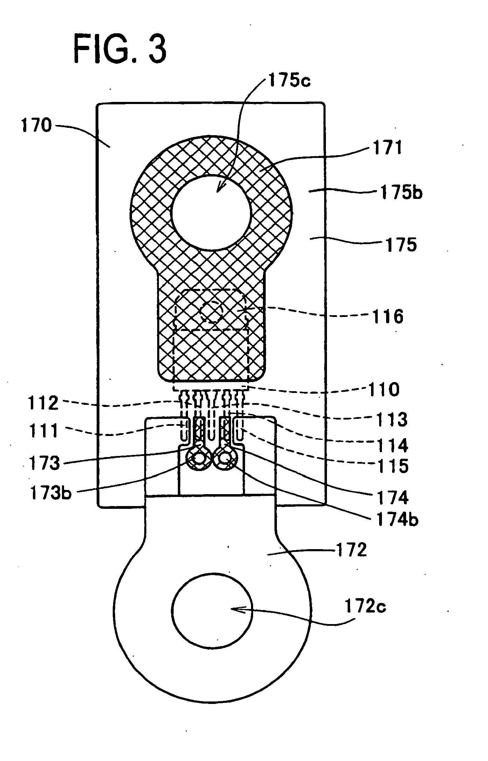

The wiring board 170 includes, as shown in Fig. 3, a main board 175 made of aluminum ceramic, a first conductor layer 171, a third conductor layer 173, and a fourth conductor layer 174, each being formed on a main surface 175b. The main board 175 is formed with a mounting hole 175c in which the first contact terminal 140 is inserted. The first conductor layer 171 is formed in an area including the peripheral portion of the mounting hole 175c and, as shown in Fig. 1, is connected to the first contact terminal 140 when mounted in the frame 130.

Respectively connected with the third and fourth conductor layers 173 and 174 are a third and fourth terminals 173b and 174b each of which is a metallic pin. These third and fourth terminals 173b and 174b are connected, through a connector terminal 183, with electrical leads 182 and 184 respectively for connection to an ECU (engine control unit) 210 (see Figs. 1 and 4). Further, a second conductor plate 172 made of a metallic flat plate is fixedly provided on the main surface 175b of the main board 175. This second conductor plate 172 has a mounting hole 172c for insertion of the second contact terminal 150 and is connected to the second contact terminal 150 when mounted on the frame 130.

The semiconductor switch 110 is mounted on the above wiring board 170 as shown in Fig. 1 and is fixed on the metallic part 133 of the frame 130 through this wiring board 170. Specifically, as shown in Fig. 3, the tab 116 of the semiconductor switch 110 is electrically connected to the first conductor layer 171 by soldering. Similarly, the first and fifth connector pins 111 and 115 are electrically connected to the second conductor plate 172, the second connector pin 112 is electrically connected to the third conductor layer 173, and the fourth connector pin 114 is electrically connected to the fifth conductor layer 174.

The wiring board 170 on which the semiconductor switch 110 is mounted in the above way is set in the first through hole 132b of the resinous part 132 by fitting the mounting holes 175c and 172c onto the first and second contact terminals 140 and 150 respectively. The wiring board 170 is thus fixed to the frame 130 with nuts 187. In the present embodiment, the third connector pin 113 is not connected to any conductor layers. A washer terminal 181b attached with an electrical lead 181 for connection to the ECU 210 is also fitted on the second contact terminal 150 (see Figs. 1 and 4).

In the present embodiment, the semiconductor switch 110 is fixed to the frame 130 in a position where the junction temperature of the semiconductor switch 110 becomes the shut-off temperature (150°C) when the temperature of the electrothermal heating element 120 rises over the convergence temperature (300°C) for any reason (failure). In addition, the semiconductor switch 110 is fixed on the metallic part 133 of the frame 130 through the wiring board 170 so that the temperature of the semiconductor switch 110 is increased rapidly as the temperature of the electrothermal heating element 120 is increased.

Accordingly, even where the temperature of the electrothermal heating element 120 rises over the convergence temperature (300°C) for any reason (failure), the junction temperature of the semiconductor switch 110 will rapidly become the shut-off temperature (150°C). The semiconductor switch 110 is then turned OFF by the overtemperature protecting function.

In the present embodiment, the first through hole 132b is filled with silicone resin 195 to cover the semiconductor switch 110, the wiring board 170, and others with resin. This makes it possible to render the semiconductor switch 110, the wiring board 170, and others waterproof, and further to keep out water into the air heater 101 through the first through hole 132b.

The second and third through holes 132c and 132d are formed at respective outer edges with counter bored holes 132m and 132n in each of which a silicone rubber ring 196 is fitted to allow insertion of each of the second and third contact terminals 150 and 160. It is therefore possible to prevent water from entering the air heater 101 through the second and third through holes 132c and 132d.

The air heater unit 100 for a vehicle is fixedly placed in an air-intake path connecting an air cleaner not shown to an intake manifold of an internal combustion engine and is used for heating the intake air. To be more specific, the air heater unit 100 is secured in the air-intake path with bolts through four mounting holes 131b formed in the frame 130 so that the electrothermal heating element 120 of the air heater 101 is placed in the air-intake path.

Fig. 4 is a circuit diagram of an air heater system 200 for a vehicle in the present embodiment, provided with the above air heater unit 100 for a vehicle and ECU 210.

In the air heater system 200 for a vehicle, the first contact terminal 140 is electrically connected to a vehicle-mounted battery 220 having one terminal connected to ground. The tab 116 of the semiconductor switch 110 is thus electrically connected to the battery 220. Further, the first and fifth connector pins 111 and 115 of the semiconductor switch 110 are connected to the second contact terminal 150 and the third contact terminal 160 is connected to ground through the electrothermal heating element 120. With this structure, electric power is supplied to the electrothermal heating element 120 from the battery 220 through the semiconductor switch 110, thereby heating gas (intake air) passing through the air-intake path. As shown in Fig. 4, the semiconductor switch 110 is connected to the battery 220 and connected in series with the electrothermal heating element 120.

The second connector pin 112 of the semiconductor switch 110 is connected to the ECU 210 through the electrical lead 182. Thus, the ECU 210 can control the ON-OFF switching of the semiconductor switch 110.

The fourth connector pin 114 is connected to the ECU 210 through the electrical lead 184. This semiconductor switch 110 is arranged to output the current I2 from the fourth connector pin 114 at a predetermined ratio (1/21000 in the present embodiment) to the current I1 flowing in the electrothermal heating element 120. On the other hand, the second contact terminal 150 of the air heater 101 is connected to the ECU 210 through the electrical lead 181. Accordingly, the ECU 210 can detect the voltage V to be applied to the electrothermal heating element 120 and calculate a resistance value R1 of the electrothermal heating element 120 by using the detected voltage V and the current I2.

The air heater system 200 for a vehicle is arranged to perform the PWM control so that the resistance value R1 of the electrothermal heating element 120 becomes a predetermined resistance value. The resistance value R1 of the electrothermal heating element 120 and the temperature thereof are in a predetermined correspondence relation. Accordingly, when the PWM control is performed to bring the resistance value R1 of the electrothermal heating element 120 to the predetermined resistance value, the temperature of the electrothermal heating element 120 can be controlled to the predetermined temperature. Specifically, the duty ratio of ON-OFF switching of the semiconductor switch 110 is adjusted based on the voltage V of the vehicle-mounted battery 220, thereby controlling electric power to be supplied to the electrothermal heating element 120. The resistance value R1 of the electrothermal heating element 120 can thus be brought to the predetermined resistance value. The air heater system 200 for a vehicle can therefore control the temperature of the electrothermal heating element 120 to the predetermined temperature regardless of the quantity of intake air.

The duty ratio of the ON-OFF switching of the semiconductor switch 110 is also adjusted to control the temperature of the electrothermal heating element 120 in multiple stages. Accordingly, the temperature of intake air can be regulated to an appropriate temperature for an operating condition of the internal combustion engine. This makes it possible to realize various heating modes according to the operating conditions of the internal combustion engine.

In the air heater system 200 for a vehicle having the above structure and circuits, the semiconductor switch 110 is placed so that the junction temperature of the semiconductor switch 110 becomes the shut-off temperature (150°C) as soon as the temperature of the electrothermal heating element 120 rises over the convergence temperature (300°C) for any reason (failure) as mentioned above. Thus, the temperature of the semiconductor switch 110 becomes the shut-off temperature (150°C) in the case where the temperature of the electrothermal heating element 120 rises over the convergence temperature (300°C) as well as the case where the semiconductor switch 110 reaches the shut-off temperature (150°C) by self-heating. The overtemperature protecting circuit 118 (the overtemperature protecting function) interrupts the current I1 flowing between the drain and the source, bringing the semiconductor switch 110 in an OFF state. This interrupts the energization to the electrothermal heating element 120, making it possible to suppress an abnormally excessive rise of temperature of the electrothermal heating element 120 over the convergence temperature (300°C). Consequently, it is possible to prevent the electrothermal heating element 120 and the frame 130 from being deteriorated, melted, or deformed which may be caused by an abnormal rise of temperature of the electrothermal heating element 120 over the convergence temperature (300°C).

In the present embodiment, particularly, most part of the frame 130 is constructed of the resinous part 132. The air heater unit for a vehicle using such frame including the resinous part has a problem that the resinous part may be softened or deformed into a nonusable state.

However, in the present embodiment as described above, the abnormally excessive rise of temperature of the electrothermal heating element 120 over the convergence temperature (300°C) is prevented and the frame 130 includes the resinous part 132 arranged in a position so that the temperature of the resinous part 132 of the frame 130 remains below the deflection temperature under load (260°C) even where the temperature of the electrothermal heating element 120 reaches the convergence temperature (300°C). Accordingly, there is no possibility that the resinous part 132 of the frame 130 is increased in temperature over the deflection temperature under load (260°C) which may cause softening or deformation of the resinous part 132 of the frame 130. The resinous part 132 can maintain rigidity adequate for actual use. The air heater unit 100 for a vehicle can be reduced in weight by an amount of the metallic part substituted by the resinous part 132 as compared with a conventional air heater unit for a vehicle with a frame entirely made of metal.

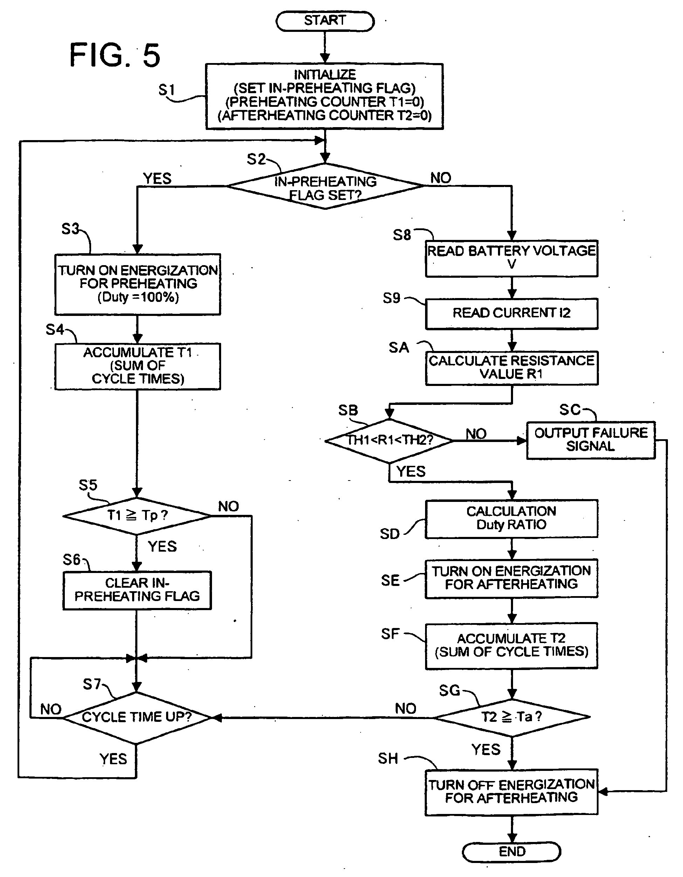

The heating of intake air by means of the air heater system 200 for a vehicle is explained with reference to a flowchart shown in Fig. 5

When a keyswitch of an engine is first turned on, causing the application of voltage to the ECU 210, and the ECU 210 starts operating, a program in the ECU 210 is initialized in step S1. Specifically, a flag indicating "in-preheating" is set, and a preheating counter T1 is set at 0 and an afterheating counter T2 is set at 0. Then, in following step S2, it is determined whether or not the in-preheating flag has been set.

If the in-preheating flag has been set, a flow advances to step S3 in which energization for preheating is started. In the present embodiment, the energization for preheating is performed at a 100% duty ratio. To be more specific, the semiconductor switch 110 remains turned ON through the electrical lead 182. In following step S4, the preheating counter T1 corresponding to a preheating duration is accumulated. Specifically, the flow returns to step S2 every time a predetermined cycle time elapses in step S7 as mentioned later. Every time the flow passes through step S4, the preheating counter T1 is incremented by 1. In following step S5, it is determined whether or not the preheating counter T1 has reached the number of times Tp the preheating is set, corresponding to a termination time of preheating. In the present embodiment, one cycle time is set at 0.05 second and the number of preheating setting times is set at 200, i.e., the termination time of preheating is set at 10 seconds.

If the preheating counter T1 has not reached yet the predetermined number of preheating setting times Tp (NO), the flow advances to step S7 in which it is determined whether or not the cycle time has elapsed. This determination is repeated until the cycle time has elapsed. After the lapse of the cycle time, the flow returns to step S2 again and the above operations are repeated to maintain the preheating. If the preheating counter T1 has reached the number of preheating setting times Tp; YES in step S5, the flow advances to step S6 in which the in-preheating flag is cleared. After the lapse of the cycle time in step S7, the flow returns to step S2.

In step S2, accordingly, it is determined that the in-preheating flag has not been set (NO). The preheating period is terminated and the flow advances to step S8. In step S8, the voltage V of the vehicle-mounted battery 220 (the voltage to be applied to the electrothermal heating element 120) is detected through the electrical lead 181. In step S9, further, the current I2 is detected through the electrical lead 184. Thus, intensity of the current I1 flowing in the electrothermal heating element 120 is determined. In step SA, a resistance value R1 of the electrothermal heating element 120 is calculated based on the voltage V and the current 11 obtained in steps S8 and S9

The flow then advances to step SB in which it is determined whether or not the resistance value R1 of the electrothermal heating element 120 is a value between a reference resistance lower limit TH1 ("Initial resistance value Rc of the electrothermal heating element 120" x 80% in the present embodiment) and a reference resistance upper limit TH2 ("Initial resistance value Rc of the electrothermal heating element 120" x 20% in the present embodiment). If the resistance value R1 is smaller than the reference resistance lower limit TH1 or larger than the reference resistance upper limit TH2, the flow advances to step SC in which a signal indicating a failure is output. At this time, the ECU 210 can operate a warning device 230 (see Fig. 4) connected thereto to warn a driver of a failure of the air heater system 200 for a vehicle (for example, by turning on a warning lamp on a driver's side). The flow then advances to step SH in which the afterheating is terminated.

If the resistance value R1 is between the reference resistance lower limit TH1 and the reference resistance upper limit value TH2, the flow advances to step SD in which the duty ratio in the afterheating is calculated to bring the resistance value R1 of the electrothermal heating element 120 to a predetermined resistance value Rb. Specifically, the duty ratio of ON-OFF switching of the semiconductor switch 110 is calculated according to the voltage V of the vehicle-mounted battery 220 so that the resistance value R1 of the electrothermal heating element 120 becomes the resistance value Rb corresponding to a predetermined temperature of the electrothermal heating element 120 in the afterheating. The electric power supply to the electrothermal heating element 120 is controlled using the duty ratio calculated in the above manner. Accordingly, the temperature of the electrothermal heating element 120 can be regulated to a predetermined temperature.

The flow advances to step SE in which energization for afterheating is performed by use of the calculated duty ratio. To be concrete, the ON-OFF switching of the semiconductor switch 110 are repeated at a time rate determined based on the duty ratio. The flow then advances to step SF in which the afterheating counter T2 is accumulated. Specifically, as with the preheating counter T1, the afterheating counter T2 is incremented every time the flow passes through the step SF. In following step SG, it is determined whether or not the afterheating counter T2 has reached the number of times Ta the afterheating is set, corresponding to a termination time of the afterheating. In the present embodiment, the number of afterheating setting times Ta is set at 12000 and hence the afterheating termination time is set at 600 seconds.

If the afterheating counter T2 has not reached yet the number of afterheating setting times Ta (NO), the flow advances to step S7 and returns to step S2 again after the lapse of the cycle time. The above operations are repeated to maintain the afterheating. If the afterheating counter T2 has reached the number of afterheating setting times Ta, YES in step SG, the flow advances to step SH in which the afterheating is terminated. In the present embodiment, the preheating and afterheating (control of the resistance value of the electrothermal heating element 120 by the PWM control) are performed in the above way.

Meanwhile, there has recently been proposed a technique for returning unburned gas that flows out of an internal combustion engine to an air-intake side, burning the gas there, in order to prevent discharge of the unburned gas out of a vehicle for environmental protection. Further, there has also been proposed another technique (EGR) for returning part of exhaust air to an air-intake side to enhance thermal efficiency of an internal combustion engine. However, the returning of unburned gas or exhaust air to the air-intake side may cause a problem that contaminants in the unburned gas or exhaust gas adhere to the electrothermal heating element 120, causing a decrease in the resistance value of the electrothermal heating element 120, further leading to a short circuit in the electrothermal heating element 120. In this case, there are risks that excessive load of electric power may be applied to the semiconductor switch 110, and circuit wiring connecting between the electrothermal heating element 120 and the semiconductor switch 110 is melted down.

In the air heater system 200 for a vehicle, on the other hand, it is determined in step SB whether or not the resistance value R1 of the electrothermal heating element 120 is between the reference resistance lower limit TH1 and the reference resistance upper limit TH2. If the resistance value R1 is smaller than the reference resistance lower limit TH1 or larger than the reference resistance upper limit TH2, a signal indicating a failure is output in step SC. Therefore the ECU 210 can operate the warning device 230 (see Fig. 4) connected thereto to warn a driver of the failure of the air heater system 200 for a vehicle (e.g., a short circuit in the electrothermal heating element 120), for example, by turning on a warning lamp on a driver's side.

In the air heater system 200 for a vehicle in the present embodiment, when the temperature of the semiconductor switch 110 has reached the shut-off temperature (150°C) by self-heating, the semiconductor switch 110 is automatically turned OFF by the overtemperature protecting circuit 118. Even where the temperature of the electrothermal heating element 120 rising over the convergence temperature (300°C) for any reason (failure), the heat thereof is conducted to the semiconductor switch 110 through the metallic part 133 of the frame, and the temperature of the semiconductor switch 110 rapidly becomes the shut-off temperature (150°C). That is, in each of the above cases, the preheating or afterheating is interrupted (stopped).

It is accordingly possible to prevent malfunction and breakdown of the semiconductor switch 110 which may be caused by the excessive rise of temperature over the shut-off temperature (150°C). It is also possible to prevent deterioration, meltdown, and deformation of the electrothermal heating element 120 and the frame 130 which may be caused by an excessive rise of temperature of the electrothermal heating element 120 over the convergence temperature (300°C) for any reason (failure), particularly to prevent the resinous part 132 of the frame 130 from becoming softened and deformed, thus maintaining rigidity adequate for actual use.

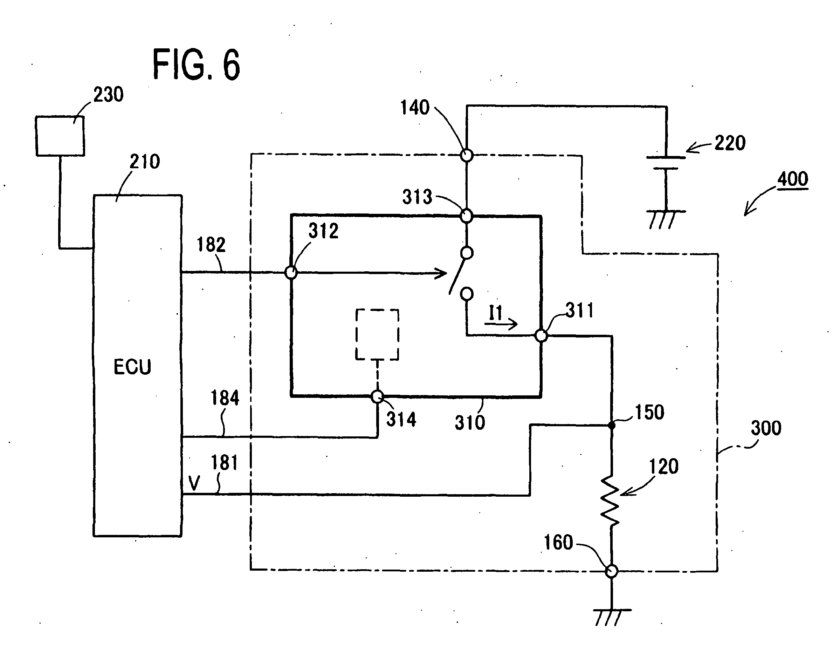

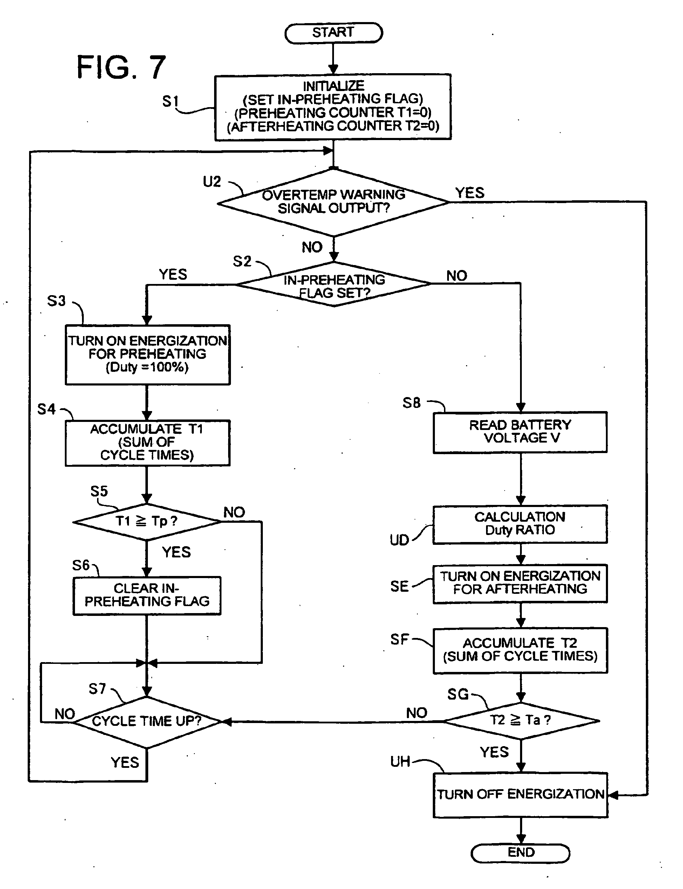

An air heater unit 300 for a vehicle and an air heater system 400 for a vehicle, which are a first modification of the above preferred embodiment, will be explained below referring to Figs. 6 and 7. The air heater unit 300 for a vehicle in the first modification is different in a semiconductor switch from and similar in other components to the air heater unit 100 for a vehicle in the above-mentioned embodiment. The air heater system 400 for a vehicle in the first modification has the semiconductor switch different from that of the air heater system 200 for a vehicle in the embodiment, and additionally provides processing of an excessive rise of temperature of the electrothermal heating element and uses a modified calculation technique for the duty ratio in the afterheating. Thus, the following explanation will be focused on different parts from the above embodiment and the explanation of similar parts are omitted or simplified.

In the first modification, similar to the embodiment, the resinous part 132 is made of PPS and arranged so that the temperature of the resinous part 132 remains below the deflection temperature under load (260°C) even when the electrothermal heating element 120 reaches the convergence temperature (300°C).

Fig. 6 is a circuit diagram of the air heater system 400 for a vehicle in the first modification, including the air heater unit 300 for a vehicle and the ECU 200. As shown in Fig. 6, in the first modification, a semiconductor switch 310 is used instead of the semiconductor switch 110 used in the above-mentioned embodiment. In the first modification, used as the semiconductor switch 310 is IGBT, No. MG200Q2YS60A, made by Toshiba Semiconductor Co., Ltd. This semiconductor switch 310 has a basic configuration of the IGBT and includes a first to fourth switch terminals 311 to 314. The first switch terminal 311 is a terminal for electric power output, the second switch terminal 312 is a terminal for input of an energization control signal (ON-OFF signal), the third switch terminal 313 is a terminal for electric power input, and the fourth switch terminal 314 is a terminal for output of an overtemperature signal.

The air heater system 400 for a vehicle is electrically connected to the vehicle-mounted battery 220 having one terminal connected to ground. Accordingly, the third switch terminal 313 of the semiconductor switch 310 is electrically connected to the battery 220. Further, the first switch terminal 311 of the semiconductor switch 310 is connected to the second contact terminal 150 and the third contact terminal 160 is grounded through the electrothermal heating element 120. With this structure, electric power is supplied to the electrothermal heating element 120 from the battery 220 through the semiconductor switch 310, thereby heating gas (intake air) passing through the air-intake path. As shown in Fig. 6, the semiconductor switch 310 is connected to the battery 220 and connected in series with the electrothermal heating element 120.

Further, the second switch terminal 312 of the semiconductor switch 310 is connected to the ECU 210 through the electrical lead 182. This makes it possible to control the ON-OFF switching of the semiconductor switch 310 by the ECU 210. The second contact terminal 150 of the air heater 301 is connected to the ECU 210 through the electrical lead 181. Accordingly, the ECU 210 can detect the voltage V to be applied to the electrothermal heating element 120.

The fourth switch terminal 314 is connected to the ECU 210 through the electrical lead 184. With this structure, an overtemperature warning signal, output from the fourth switch terminal 314, can be transmitted to the ECU 210 when the junction temperature of the semiconductor switch 310 reaches a warning temperature. The warning temperature of the semiconductor switch 310 is set at 125°C.

In the air heater system 400 for a vehicle having the above structure and circuits, similar to the above embodiment, the semiconductor switch 310 is placed in a predetermined region of the frame 130 so that the junction temperature becomes the warning temperature (125°C) as soon as the temperature of the electrothermal heating element 120 rises over the convergence temperature (300°C). Thus, the junction temperature of the semiconductor switch 310 becomes the warning temperature (125°C) rapidly even where the temperature of the electrothermal heating element 120 rises over the convergence temperature (300°C) as well as the case where the temperature of the semiconductor switch 310 reaches the warning temperature (125°C) by self-heating. The overtemperature warning signal is thus output.

The heating of intake air by means of the air heater system 400 for a vehicle is explained with reference to a flowchart shown in Fig. 7. The explanation of similar parts to those in the air heater system 200 for a vehicle in the embodiment is omitted or simplified.

When a keyswitch of an engine is first turned on, causing the application of voltage to the ECU 210, and the ECU 210 starts operating, a program of the ECU 210 is initialized in step S1 in the same manner as with the above embodiment. A flow advances to step U2 in which it is determined whether or not an overtemperature warning signal is output from the semiconductor switch 310. If no overtemperature warning signal is output (NO), the flow advances to step S2 in which it is determined whether or not an in-preheating flag has been set.

If the in-preheating flag has been set, the flow advances to step S3 in which energization for preheating is started. In the first modification, the energization for preheating is performed at a 100% duty ratio as with the embodiment. In following steps S4 and S5, in the same manner as with the embodiment, the preheating counter T1 is accumulated and it is detected whether or not the preheating counter T1 has reached the number of preheating setting times Tp. In the first modification, as with the embodiment, one cycle time is set at 0.05 second and the number of preheating setting times is set at 200, i.e., the termination time of preheating is set at 10 seconds.

If the preheating counter T1 has not reached yet the predetermined preheating Tp (NO), the flow advances to step S7 and returns to step U2 again after a lapse of the cycle time for repeating the above mentioned operations to maintain the preheating. However, if the overtemperature warning signal is detected; YES in step U2, the flow advances to step UH to terminate the preheating. This makes it possible to prevent the semiconductor switch 310 from rising over the warning temperature (125°C) for a long term. It is also possible to prevent an abnormally excessive rise of temperature of the electrothermal heating element 120 over the convergence temperature (300°C) for any reason (failure).

It is accordingly possible to prevent malfunction and breakdown of the semiconductor switch 310 which may be caused by the excessive rise of temperature over the warning temperature (125°C). It is also possible to prevent deterioration, meltdown, and deformation of the electrothermal heating element 120 and the frame 130 which may be caused by an excessive rise of temperature of the electrothermal heating element 120 over the convergence temperature (300°C) for any reason (failure), particularly to prevent the resinous part 132 of the frame 130 from becoming softened and deformed, thus maintaining rigidity adequate for actual use.

If the preheating is continued and the preheating counter T1 has reached the number of preheating setting times Tp; YES in step S5, the flow advances to step S6 in which the in-preheating flag is cleared and, after the lapse of the cycle time in step S7, returns to step S2. If no overtemperature warning signal is detected; NO in step U2, the flow advances to step S2. In step S2, it is determined that the in-preheating flag has not been set (NO). The preheating period is thus terminated and the flow advances to step S8 in which the voltage V of the vehicle-mounted battery 220 (the voltage to be applied to the electrothermal heating element 120) is detected in the same manner as with the embodiment.

The flow then advances to step UD in which the duty ratio (D) in the afterheating is calculated to bring the temperature of the electrothermal heating element 120 to a predetermined temperature. To be concrete, assuming that initial voltage Vb of the vehicle-mounted battery 220 is Vb and the duty ratio set in advance based on this initial voltage Vb is Db, the duty ratio can be calculated by for example D=Db (V/Vb)². Accordingly, the duty ratio D of the ON-OFF switching of the semiconductor switch 310 according to the voltage V of the vehicle-mounted battery 220 can be calculated. The electric power supply to the electrothermal heating element 120 is controlled using the calculated duty ratio "D", so that the temperature of the electrothermal heating element 120 can be regulated to a predetermined temperature.

The flow then advances to step SE in which energization for afterheating is performed by use of the calculated duty ratio "D". To be concrete, the ON-OFF switching of the semiconductor switch 310 is repeated at a time rate determined based on the duty ratio. The flow advances to step SF in which the afterheating counter T2 is accumulated. Specifically, as with the preheating counter T1, the afterheating counter T2 is incremented every time the flow passes through the step SE. In following step SG, it is determined whether or not the afterheating counter T2 has reached the number of afterheating setting times Ta corresponding to the termination time of the afterheating. In the first modification, as with the embodiment, the number of afterheating setting times Ta is set at 12000 and hence the afterheating termination time is set at 600 seconds.

If the afterheating counter T2 has not reached yet the number of afterheating setting times Ta (NO), the flow advances to step S7 and returns to step U2 again after the lapse of the cycle time. The above operations are repeated to maintain the afterheating. If the overtemperature warning signal is detected; YES in step U2, the flow advances to step UH as in the case of the preheating, and the afterheating is terminated. This makes it possible to restrain the semiconductor 310 from rising over the warning temperature (125°C) for a long time. Alternatively, it is possible to prevent an abnormally excessive rise of temperature of the electrothermal heating element 120 over the convergence temperature (300°C) for any reason (failure).

On the other hand, if the afterheating is continued and the afterheating counter T2 has reached the number of afterheating setting times Ta; YES in step SG, the flow advances to step UH to terminate the afterheating. In the first modification, the preheating and afterheating are performed in the above manner.

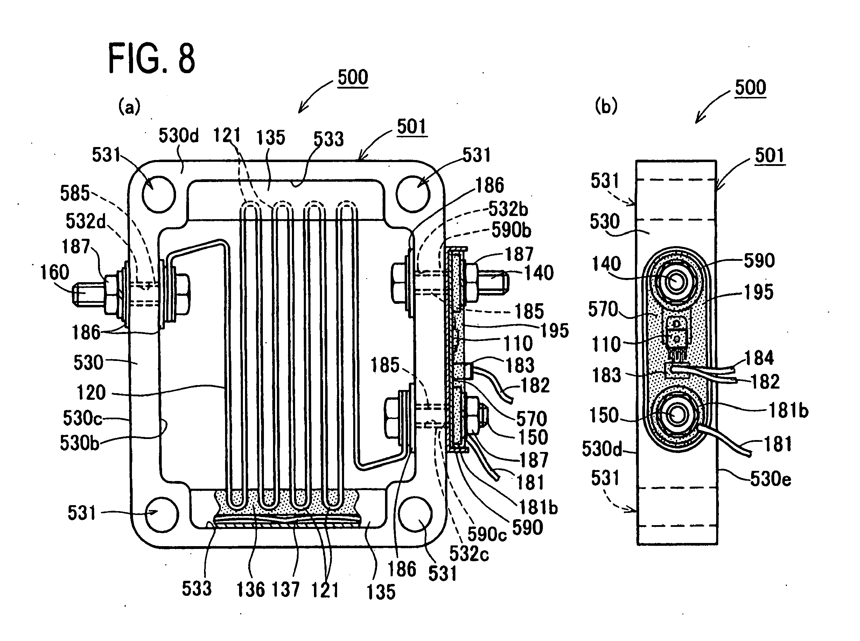

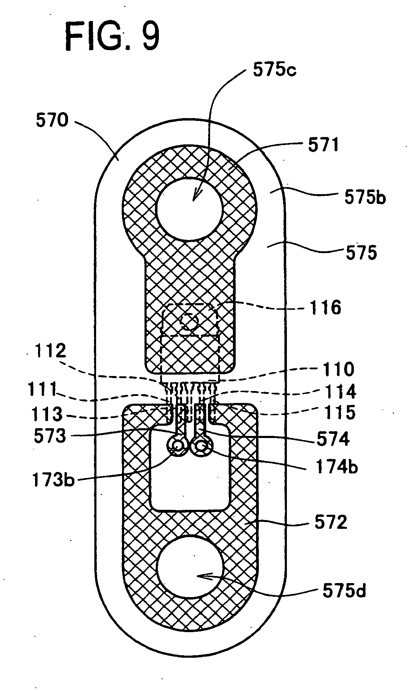

Next, an air heater unit 500 for a vehicle and an air heater system 600 for a vehicle which are a second modification of the above preferred embodiment, will be explained below referring to Figs. 8 and 9. The air heater unit 500 for a vehicle in the second modification is different in a frame of an air heater from and similar in other components to the air heater unit 100 for a vehicle in the above-mentioned embodiment. The air heater system 600 for a vehicle in the second modification has a circuit configuration identical to that in the air heater system 200 in the above embodiment, whereby performing control for heating intake air in the same manner as in the air heater system 200 for a vehicle in the embodiment (see Fig. 5).

Accordingly, the following explanation will be focused on different parts from the above embodiment and the explanation of similar parts are omitted or simplified.

Fig. 8 is a view showing the air heater unit 500 for a vehicle in the second modification; (a) is a plan view and (b) is a side view. The air heater unit 500 for a vehicle includes an air heater 501 and wiring board 570, both being different from those in the embodiment, and the semiconductor switch 110 identical to that in the embodiment.

The air heater 501 includes a frame 530 different from that in the embodiment, the electrothermal heating element 120 and the first, second, and third contact terminals 140, 150, and 160, each being identical to that in the embodiment.

The frame 530 is made of aluminum alloy, which is a metallic body moulded in a substantially rectangular ring shape by Die Casting. This frame 530 is formed with four mounting holes 531, each extending through the frame 530 to open at a front surface 530d and a back surface 530e, and a first through hole 532b, a second through hole 532c, and a third through hole 532d, each extending through the frame 530 to open at an internal surface 530b and an external surface 530c. Further, the internal surface 530b of the frame 530 is formed with two recesses 533 oppositely disposed.

Each of these two recesses 533 holds a metallic bracket 135 identical to that in the embodiment. In this metallic bracket 135 (in each recess), an insulator 136 is provided and a plate spring 137 is interposed between the bracket 135 and the insulator 136.

The first, second, and third contact terminals 140, 150, and 160 are inserted in the first, second, and third through holes 532b, 532c, and 532d of the frame 530 respectively through respective insulation washers 186. For insulation between the frame 530 and the first, second, and third contact terminals 140, 150, and 160, insulation sleeves 585 are fitted in the first, second, and third through holes 532b, 532c, and 532d respectively.

The wiring board 570 has a main board 575 made of aluminum ceramic and a first conductor layer 571 to a fourth conductor layer 574 each being formed on a main surface 575b, as shown in Fig. 9. The main board 575 is formed with mounting holes 575c and 575d in which the first and second contact terminals 140 and 150 are inserted. The first conductor layer 571 is formed in an area including the peripheral portion of the mounting hole 575c and is connected to the first contact terminal 140 when mounted in the frame 530. The second conductor layer 572 is formed in an area including the through hole 575d and is connected to the second contact terminal 150 when mounted in the frame 530. Respectively connected with the third and fourth conductor layers 573 and 574 are a third and fourth terminals 173b and 174b each of which is a metallic pin. These third and fourth terminals 173b and 174b are connected, through a connector terminal 183, with electrical leads 182 and 184 respectively for connection to an ECU 210 (see Figs. 4 and 8).

The semiconductor switch 110 is mounted on the wiring board 570 as shown in Fig. 8 and is fixed on the frame 530 through the wiring board 570. Specifically, as shown in Fig. 9, the tab 116 of the semiconductor switch 110 is electrically connected to the first conductor layer 571 by soldering. Similarly, the first and fifth connector pins 111 and 115 are electrically connected to the second conductor layer 572, the second connector pin 112 is electrically connected to the third conductor layer 573, and the fourth connector pin 114 is electrically connected to the fourth conductor layer 574.

The wiring board 570 on which the semiconductor switch 110 is mounted in the above way is fixed on the frame 530 with nuts 187 by fitting the mounting holes 575c and 575d onto the first and second contact terminals 140 and 150 respectively. A washer terminal 181b attached with an electrical lead 181 for connection to the ECU 210 is also fitted on the second contact terminal 150 (see Figs. 4 and 8).

In the second modification, as is in the case with the embodiment, the semiconductor switch 110, the wiring board 570, and others are covered with silicone resin in order to render the semiconductor switch 110, the wiring board 170, and others waterproof. Specifically, provided is a box-shaped casing 590 made of resin (PPS) having mounting holes 590b and 590c for insertion of the first and second contact terminals 140 and 150. The casing 590 is attached to the frame 530 prior to the mounting of the wiring board 570 by fitting the mounting holes 590b and 590c onto the first and second contact terminals 140 and 150 respectively. When the wiring board 570 with the semiconductor switch 110 and others fixed thereon is mounted in the above manner, these are set in the casing 590. Then, this casing 590 is filled with silicone resin to cover the semiconductor switch 110, the wiring board 570, and others with resin.

The thus structured air heater unit 500 for a vehicle is fixedly placed, as with the air heater unit 100 for a vehicle in the embodiment, in an air-intake path connecting an air cleaner not shown to an intake manifold of an internal combustion engine. This makes it possible to appropriately heat the intake air in the air heater system 600 for a vehicle (including the air heater unit 500 for a vehicle and the ECU 210) in the second modification as with the air heater system 200 for a vehicle in the embodiment.

Although the present invention is explained in the preferred embodiment and the first and second modifications as above, the present invention is not limited to the above embodiments and may be embodied in other specific forms without departing from the essential characteristics thereof.

For instance, in the above embodiments, the semiconductor switches 110 and 310 are fixed to the frames 130 through the wiring boards, but the semiconductor switches may be directly fixed to the frames 130.

The wiring board 170 made of aluminum ceramic is used in the above embodiments, but the material of the wiring board is not limited to the aluminum ceramic. For example, a metallic wiring board having an insulation layer on a front surface, such as an enamel board, may be used.

In the embodiment and first modification, the resinous part 132 of the frame 130 is made of PPS having a lower deflection temperature under load than the convergence temperature (300°C) of the electrothermal heating element 120, but the material of the resinous part 132 is not limited thereto. However, if the resinous part of the frame is made of resin having a lower deflection temperature under load than the convergence temperature of the electrothermal heating element 120, as is in the case with the above mentioned embodiments, this resinous part has to be arranged in a place where the temperature of the resinous part remains below the deflection temperature under load even when the temperature of the electrothermal heating element 120 reaches the convergence temperature.

On the other hand, the resinous part of the frame may of course be made of resin having a higher deflection temperature under load than the convergence temperature of the electrothermal heating element 120. Specifically, the resinous part of the frame may be made of polyimide having a higher deflection temperature under load (360°C) than the convergence temperature (300°C) of the electrothermal heating element 120. If the resinous part of the frame is made of the resin having the higher deflection temperature of the electrothermal heating element in this way, the resinous part of the frame may not be softened and deformed even when the electrothermal heating element is at the convergence temperature. It is therefore possible to provide higher design freedom to the frame including the resinous part.

In the embodiment, the preheating is terminated and followed by the afterheating if the preheating counter T1 has reached the number of preheating setting times Tp (where the preheating termination time has elapsed) in step S5. A heating mode switching method is, however, not limited to such manner. For instance, it may be arranged that the voltage V of the vehicle-mounted battery 220 and the current 12 are detected in the preheating as in the case of the afterheating and the resistance value R1 of the electrothermal heating element 120 is calculated. If this resistance value R1 has reached a predetermined resistance value (that is, if the electrothermal heating element 120 has reached the predetermined temperature), a heating mode (the afterheating in the embodiment) is switched to another heating mode. Alternatively, it may be arranged to calculate an accumulated amount of electric power having been applied to the electrothermal heating element 120 based on the voltage V of the vehicle-mounted battery 220 and the current I2. If this accumulated amount of electric power has reached a predetermined value, the heating mode is switched to a next heating mode. This is because the temperature of the electrothermal heating element 120 and the accumulated amount of electric power are in a corresponding relation in the preheating stage.

In the first modification, the preheating or afterheating is terminated if the overtemperature warning signal is detected in step U2 (YES). However, the preheating or afterheating may be suspended without being terminated and be restarted after no overtemperature warning signal becomes output.

### INDUSTRIAL APPLICABILITY

As clearly seen in the above description, according to the present invention, an air heater unit for a vehicle and air heater system capable of easily controlling energization to an air heater can be provided.

## Claims

1. An air heater system (100) for a vehicle, the system comprising:
an air heater (101) having an electrothermal heating element (120); and
a semiconductor switch (110) connected to the electrothermal heating element (120) in series for controlling energization to the electrothermal heating element (120),
**characterized in that** the semiconductor switch (110) is a semiconductor switch having a current detecting function provided with a terminal for current detection to detect a current
which flows in the electrothermal heating element, wherein
the air heater system (100) further comprises resistance control means for controlling a resistance value of the electrothermal heating element (120) based on output corresponding to the current which flows in the electrothermal heating element (120) detected through the current detection terminal of the semiconductor switch (110).

2. The air heater system (100) for a vehicle according to claim 1, further comprising failure detection means for detecting a failure of the electrothermal heating element (120) by detecting a resistance value of the electrothermal heating element (120) based on output corresponding to the current which flows in the electrothermal heating element detected through the current detection terminal of the semiconductor switch (110).

3. The air heater system (100) for a vehicle according to any one of claims 1 to 2, wherein the air heater (101) includes a frame (130) which holds the electrothermal heating element (120), and the semiconductor switch (110) is fixed to the frame.

4. The air heater system for a vehicle according to claim 3, wherein
the electrothermal heating element (120) has such a temperature converging property that a temperature rises and then converges to a predetermined convergence temperature when the electrothermal heating element (120) is continuously supplied with maximum allowable voltage,
the frame (130) includes a resinous part (132) made of resin, and
the resinous part (132) is arranged in such a place that the resinous part has rigidity adequate for actual use even when the electrothermal heating element (120) is at the convergence temperature.

5. The air heater system (100) for a vehicle according to claim 3, wherein
the electrothermal heating element (120) has such a temperature converging property that a temperature rises and then converges to a predetermined convergence temperature when the electrothermal heating (120) element is continuously supplied with maximum allowable voltage,
the frame (130) includes a resinous part (132) made of resin having a predetermined deflection temperature under load, and
the resinous part (132) is arranged in such a place that the temperature of the resinous part remains below the deflection temperature under load even when the electrothermal heating element is at the convergence temperature.

6. An air heater system (100) for a vehicle comprising:
an air heater (101) having an electrothermal heating element (120), and
a semiconductor switch (110) connected to the electrothermal heating element (120) in series for controlling energization to the electrothermal heating element, **characterized by**
a wiring board (170) on which the semiconductor switch (110) is mounted, wherein
the air heater (101) has a frame (130) which holds the electrothermal heating element, and
the semiconductor switch (110) is fixed to the frame through the wiring board (170), and the semiconductor switch and the wiring board are covered with resin.

7. The air heater system for a vehicle according to claim 6, wherein
the semiconductor switch (110) has an overtemperature protecting function for interrupting current passing through the semiconductor switch (110) when a temperature thereof becomes a shut-off temperature, and
the semiconductor switch (110) is fixed to the frame (130) in such a place that the temperature of the semiconductor switch becomes the shut-off temperature when the temperature of the electrothermal heating element reaches an excessive temperature.

8. The air heater system for a vehicle according to claim 7, wherein
the frame (130) of the air heater includes a metallic part (133), and
the semiconductor switch (110) is fixed to the metallic part (133) of the frame directly or through an electrical insulator (136).

9. The air heater system (100) for a vehicle according to claim 6, wherein
the semiconductor switch (110) includes an overtemperature signal output terminal which outputs an overtemperature warning signal when the temperature of the semiconductor switch (110) becomes a warning temperature,
the semiconductor switch is fixed to the frame (130) in such a place that the temperature of the semiconductor switch (110) becomes the warning temperature when the temperature of the electrothermal heating element reaches the excessive temperature, and
the air heater system (100) includes overtemperature protecting means for interrupting the current passing through the semiconductor switch (110) in response to the overtemperature warning signal from the overtemperature signal outputting terminal of the semiconductor switch.

10. The air heater system for a vehicle according to claim 9, wherein the frame (130) of the air heater includes a metallic part (133), and
the semiconductor switch (110) is fixed to the metallic part (130) of the frame directly or through an electrical insulator (136).

11. The air heater system for a vehicle according to claim 6, wherein
the electrothermal heating element (120) has such a temperature converging property that a temperature rises and then converges to a predetermined convergence temperature when the electrothermal heating element (120) is continuously supplied with maximum allowable voltage,
the frame (130) includes a resinous part (132) made of resin, and
the resinous part (132) is arranged in such a place that the resinous part has rigidity adequate for actual use even when the electrothermal heating element is at the convergence temperature.

12. The air heater system for a vehicle according to claim 6, wherein
the electrothermal heating element (120) has such a temperature converging property that a temperature rises and then converges to a predetermined convergence temperature when the electrothermal heating element is continuously supplied with maximum allowable voltage,
the frame (130) includes a resinous part (132) made of resin having a predetermined deflection temperature under load, and
the resinous part (132) is arranged in such a place that the temperature of the resinous part remains below the deflection temperature under load even when the electrothermal heating element is at the convergence temperature.

13. An air heater unit (100) for a vehicle, the unit comprising:
an air heater (101) includes an electrothermal heating element (120) and a frame (130) which holds the electrothermal heating element, **characterized in that**
a semiconductor switch (110) is fixed to the frame of the air heater (101) and connected to the electrothermal heating element (120) in series to control energization to the electrothermal heating element, and
a wiring board (170) on which the semiconductor switch (110) is mounted,
the semiconductor switch (110) being fixed to the frame (130) through the wiring board (170); and the semiconductor switch and the wiring board being covered with resin.

14. The air heater unit for a vehicle according to claim 13, wherein
the semiconductor switch (110) has an overtemperature protecting function for interrupting current passing through the semiconductor switch when a temperature thereof becomes a shut-off temperature, and
the semiconductor switch (110) is fixed to the frame (130) in such a place that the temperature of the semiconductor switch becomes the shut-off temperature when the temperature of the electrothermal heating element (120) reaches an excessive temperature.

15. The air heater unit for a vehicle according to claim 14, wherein
the frame (130) of the air heater includes a metallic part (133), and
the semiconductor switch (110) is fixed to the metallic part (133) of the frame (130) directly or through an electrical insulator (136).

16. The air heater unit for a vehicle according to claim 13, wherein
the semiconductor switch (110) includes an overtemperature signal output terminal which outputs an overtemperature warning signal when the temperature of the semiconductor switch becomes a warning temperature, and
the semiconductor switch (110) is fixed to the frame (130) in such a place that the temperature of the semiconductor switch becomes the warning temperature when the temperature of the electrothermal heating element reaches the excessive temperature.

17. The air heater unit for a vehicle according to claim 16, wherein
the frame (130) of the air heater includes a metallic part (133), and
the semiconductor switch (110) is fixed to the metallic part (133) of the frame directly or through an electrical insulator (136).

18. The air heater unit for a vehicle according to claim 13, wherein
the electrothermal heating element (100) has such a temperature converging property that a temperature rises and then converges to a predetermined convergence temperature when the electrothermal heating element is continuously supplied with maximum
allowable voltage,
the frame (130) includes a resinous part made of resin, and
the resinous part is arranged in such a place that the resinous part has rigidity adequate for actual use even when the electrothermal heating element is at the convergence temperature.

19. The air heater unit for a vehicle according to claim 13, wherein
the electrothermal heating element (120) has such a temperature converging property that a temperature rises and then converges to a predetermined convergence temperature when the electrothermal heating element is continuously supplied with maximum allowable voltage,
the frame (130) includes a resinous part made of resin having a predetermined deflection temperature under load, and
the resinous part is arranged in such a place that the temperature of the resinous part remains below the deflection temperature under load even when the electrothermal heating element is at the convergence temperature.

## Patentansprüche

1. Luftheizsystem (100) für ein Fahrzeug, wobei das System umfasst:
einen Luftheizer (101) mit einem elektrothermischen Heizelement (120); und
einen Halbleiterschalter (110), der mit dem elektrothermischen Heizelement (120) in Serie geschaltet ist, um die Bestromung des elektrothermischen Heizelements (120) zu steuern,
**dadurch gekennzeichnet, dass** der Halbleiterschalter (110) ein Halbleiterschalter ist, der eine Stromerfassungsfunktion aufweist mit einem Stromerfassungsanschluss, um einen Strom zu erfassen, der in das elektrothermische Heizelement fließt, wobei
das Luftheizsystem (100) ferner Widerstandskontrollmittel zum Steuern eines Widerstandswerts des elektrothermischen Heizelements (120) aufweist, gestützt auf die Ausgabe, die dem Strom entspricht, der in das thermoelektrische Heizelement (120) fließt, der durch den Stromerfassungsanschluss des Halbleiterschalters (110) erfasst wird.

2. Luftheizsystem (100) für ein Fahrzeug gemäß Anspruch 1, ferner umfassend Defekterfassungsmittel zum Erfassen eines Defektes des elektrothermischen Heizelements (120) durch Erfassen eines Widerstandswerts des elektrothermischen Heizelements (120) gestützt auf der Ausgabe, der dem Strom entspricht, der in das elektrothermische Heizelement fließt, der durch den Stromerfassungsanschluss des Halbleiterschalters (110) erfasst wird.

3. Luftheizsystem (100) für ein Fahrzeug gemäß einem der Ansprüche 1 oder 2, wobei der Luftheizer (101) einen Rahmen (130) umfasst, der das elektrothermische Heizelement (120) trägt und der Halbleiterschalter (110) an dem Rahmen befestigt ist.

4. Luftheizsystem für ein Fahrzeug gemäß Anspruch 3, wobei
das elektrothermische Heizelement (120) eine solche temperaturkonvergierende Eigenschaft aufweist, dass eine Temperatur steigt und dann zu einer vorbestimmten Konvergenztemperatur konvergiert, wenn das elektrothermische Heizelement (120) kontinuierlich mit einer maximal erlaubten Spannung versorgt wird,
der Rahmen (130) einen Harzabschnitt (132) umfasst, der aus Harz hergestellt ist, und
der Harzabschnitt (132) an einem solchen Ort angeordnet ist, dass der Harzabschnitt eine für die eigentliche Verwendung adäquate Festigkeit aufweist, selbst wenn sich das elektrothermische Heizelement (120) bei der Konvergenztemperatur befindet.

5. Luftheizsystem (100) für ein Fahrzeug gemäß Anspruch 3, wobei
das elektrothermische Heizelement (120) eine solche temperaturkonvergierende Eigenschaft aufweist, dass eine Temperatur steigt und dann zu einer vorbestimmten Konvergenztemperatur konvergiert, wenn das elektrothermische Heizelement (120) kontinuierlich mit der maximal erlaubten Spannung versorgt wird,
der Rahmen (130) ein Harzabschnitt (132) umfasst, der aus Harz hergestellt ist, das eine vorbestimmte Formbeständigkeitstemperatur unter Last aufweist, und
der Harzabschnitt (132) an einem solchen Ort angeordnet ist, dass die Temperatur des Harzabschnitts unter der Formbeständigkeitstemperatur unter Last bleibt, wenn das elektrothermische Heizelement sich bei der Konvergenztemperatur befindet.

6. Luftheizsystem (100) für ein Fahrzeug umfassend:
einen Luftheizer (101) mit einem elektrothermischen Heizelement (120); und
einen Halbleiterschalter (110), der mit dem elektrothermischen Heizelement (120) in Serie geschaltet ist, um die Bestromung des elektrothermischen Heizelements (120) zu steuern, **gekennzeichnet durch**
eine Verdrahtungsplatte (170), auf der der Halbleiterschalter (110) montiert ist, wobei
der Luftheizer (101) einen Rahmen (130) aufweist, der das elektrothermische Heizelement trägt, und
der Halbleiterschalter (110) an dem Rahmen über die Verdrahtungsplatte (170) befestigt ist, und der Halbleiterschalter und die Verdrahtungsplatte mit Harz bedeckt sind.

7. Luftheizsystem für ein Fahrzeug nach Anspruch 6, wobei
der Halbleiterschalter (110) eine Übertemperaturschutzfunktion aufweist, um den Strom, der den Halbleiterschalter (110) passiert, zu unterbrechen, wenn eine Temperatur davon eine Ausschalttemperatur erreicht, und
der Halbleiterschalter (110) an dem Rahmen (130) an einem solchen Ort befestigt ist, dass die Temperatur des Halbleiterschalters die Ausschalttemperatur erreicht, wenn die Temperatur des elektrothermischen Heizelements eine überhöhte Temperatur erreicht.

8. Luftheizsystem für ein Fahrzeug gemäß Anspruch 7, wobei
der Rahmen (130) des Luftheizers einen metallischen Abschnitt (130) umfasst, und
der Halbleiterschalter (110) an dem metallischen Abschnitt (133) des Rahmens direkt oder über einen elektrischen Isolator (136) befestigt ist.

9. Luftheizsystem (100) für ein Fahrzeug gemäß Anspruch 6, wobei
der Halbleiterschalter (110) einen Übertemperatursignalausgabeanschluss umfasst, der ein Übertemperaturwarnsignal ausgibt, wenn die Temperatur des Halbleiterschalters (110) eine Warntemperatur erreicht,
der Halbleiterschalter an dem Rahmen (130) an einem solchen Ort befestigt ist, dass die Temperatur des Halbleiterschalters (110) die Warntemperatur erreicht, wenn die Temperatur des elektrothermischen Heizelements die überhöhte Temperatur erreicht, und
das Luftheizsystem (100) ein Übertemperaturschutzmittel umfasst, um den Strom, der den Halbleiterschalter (110) passiert, in Erwiderung auf das Übertemperaturwarnsignal von dem Übertemperatursignalausgabeanschluss des Halbleiterschalters unterbricht.

10. Luftheizsystem für ein Fahrzeug nach Anspruch 9, wobei der Rahmen (130) des Luftheizers einen metallischen Abschnitt (133) umfasst, und
der Halbleiterschalter (110) an dem metallischen Abschnitt des Rahmens (130) direkt oder über einen elektrischen Isolator (136) befestigt ist.

11. Luftheizsystem für ein Fahrzeug gemäß Anspruch 6, wobei
das elektrothermische Heizelement (120) eine solche temperaturkonvergierende Eigenschaft aufweist, dass eine Temperatur steigt und dann zu einer vorbestimmten Konvergenztemperatur konvergiert, wenn das elektrothermische Heizelement (120) kontinuierlich mit der maximal erlaubten Spannung versorgt wird,
der Rahmen (130) einen Harzabschnitt (132) umfasst, der aus Harz hergestellt ist, und
der Harzabschnitt (132) an einem solchen Ort angeordnet ist, dass der Harzabschnitt eine für die eigentliche Verwendung adäquate Festigkeit aufweist, selbst wenn sich das elektrothermische Heizelement (120) bei der Konvergenztemperatur befindet.

12. Luftheizsystem für ein Fahrzeug gemäß Anspruch 6, wobei
das elektrothermische Heizelement (120) eine solche temperaturkonvergierende Eigenschaft aufweist, dass eine Temperatur steigt und dann zu einer vorbestimmten Konvergenztemperatur konvergiert, wenn das elektrothermische Heizelement kontinuierlich mit der maximal erlaubten Spannung versorgt wird,
der Rahmen (130) ein Harzabschnitt (132) umfasst, der aus Harz hergestellt ist, das eine vorbestimmte Formbeständigkeitstemperatur unter Last aufweist, und
der Harzabschnitt (132) an einem solchen Ort angeordnet ist, dass die Temperatur des Harzabschnitts unter der Formbeständigkeitstemperatur unter Last bleibt, wenn das elektrothermische Heizelement sich bei der Konvergenztemperatur befindet.

13. Luftheizeinheit (100) für ein Fahrzeug, wobei die Luftheizeinheit umfasst:
einen Luftheizer (101) umfassend ein elektrothermisches Heizelement (120) und einen Rahmen (130), der das elektrothermische Heizelement trägt, **dadurch gekennzeichnet, dass**
ein Halbleiterschalter (110) an dem Rahmen des Luftheizers (101) befestigt ist und mit dem elektrothermischen Heizelement (120) in Serie geschaltet ist, um die Bestromung des elektrothermischen Heizelements zu steuern, und
eine Verdrahtungsplatte (170), auf die der Halbleiterschalter (110) montiert ist,
wobei der Halbleiterschalter (110) über die Verdrahtungsplatte (170) an dem Rahmen (130) befestigt ist, und der Halbleiterschalter und die Verdrahtungsplatte mit Harz bedeckt sind.

14. Luftheizeinheit für ein Fahrzeug gemäß Anspruch 13, wobei
der Halbleiterschalter (110) eine Übertemperaturschutzfunktion aufweist, um den Strom, der den Halbleiterschalter (110) passiert, zu unterbrechen, wenn eine Temperatur davon eine Ausschalttemperatur erreicht, und
der Halbleiterschalter (110) an dem Rahmen (130) an einem solchen Ort befestigt ist, dass die Temperatur des Halbleiterschalters die Ausschalttemperatur erreicht, wenn die Temperatur des elektrothermischen Heizelements eine überhöhte Temperatur erreicht.

15. Luftheizeinheit für ein Fahrzeug gemäß Anspruch 14, wobei
der Rahmen (130) des Luftheizers einen metallischen Abschnitt (133) umfasst, und
der Halbleiterschalter (110) an dem metallischen Abschnitt (133) des Rahmens (130) direkt oder über einen elektrischen Isolator (136) befestigt ist.

16. Luftheizeinheit für ein Fahrzeug gemäß Anspruch 13, wobei
der Halbleiterschalter (110) einen Übertemperatursignalausgabeanschluss umfasst, der ein Übertemperaturwarnsignal ausgibt, wenn die Temperatur des Halbleiterschalters eine Wamtemperatur erreicht,
der Halbleiterschalter (110) an dem Rahmen (130) an einem solchen Ort befestigt ist, dass die Temperatur des Halbleiterschalters die Wamtemperatur erreicht, wenn die Temperatur des elektrothermischen Heizelements die überhöhte Temperatur erreicht.

17. Luftheizeinheit für ein Fahrzeug gemäß Anspruch 16, wobei
der Rahmen (130) des Luftheizers einen metallischen Abschnitt (133) umfasst, und
der Halbleiterschalter (110) an dem metallischen Abschnitt des Rahmens (130) direkt oder über einen elektrischen Isolator (136) befestigt ist.

18. Luftheizeinheit für ein Fahrzeug gemäß Anspruch 13, wobei
das elektrothermische Heizelement (120) eine solche temperaturkonvergierende Eigenschaft aufweist, dass eine Temperatur steigt und dann zu einer vorbestimmten Konvergenztemperatur konvergiert, wenn das elektrothermische Heizelement kontinuierlich mit der maximal erlaubten Spannung versorgt wird,
der Rahmen (130) einen Harzabschnitt umfasst, der aus Harz hergestellt ist, und
der Harzabschnitt an einem solchen Ort angeordnet ist, dass der Harzabschnitt eine für die eigentliche Verwendung adäquate Festigkeit aufweist, selbst wenn sich das elektrothermische Heizelement bei der Konvergenztemperatur befindet.

19. Luftheizeinheit für ein Fahrzeug gemäß Anspruch 13, wobei
das elektrothermische Heizelement (120) eine solche temperaturkonvergierende Eigenschaft aufweist, dass eine Temperatur steigt und dann zu einer vorbestimmten Konvergenztemperatur konvergiert, wenn das elektrothermische Heizelement kontinuierlich mit der maximal erlaubten Spannung versorgt wird,
der Rahmen (130) ein Harzabschnitt umfasst, der aus Harz hergestellt ist, das eine vorbestimmte Formbeständigkeitstemperatur unter Last aufweist, und
der Harzabschnitt an einem solchen Ort angeordnet ist, dass die Temperatur des Harzabschnitts unter der Formbeständigkeitstemperatur unter Last bleibt, wenn das elektrothermische Heizelement sich bei der Konvergenztemperatur befindet.

## Revendications

1. Système réchauffeur d'air (100) pour véhicule, le système comprenant :
un réchauffeur d'air (101) ayant un élément de chauffage électrothermique (120) : et
un interrupteur à semi-conducteur (110) connecté en série à l'élément de chauffage électrothermique (120) pour commander l'alimentation en énergie de l'élément de chauffage électrothermique (120),
**caractérisé en ce que** l'interrupteur à semi-conducteur (110) est un interrupteur à semi-conducteur ayant une fonction de détection de courant au moyen d'une borne de détection de courant pour détecter un courant passant dans l'élément de chauffage électrothermique,
le système réchauffeur d'air (100) comprenant, en outre, un moyen de commande de résistance pour commander une valeur de résistance de l'élément de chauffage électrothermique (120) sur la base d'une sortie correspondant au courant qui passe dans l'élément de chauffage électrothermique (120) et qui est détecté via la borne de détection de courant de l'interrupteur à semi-conducteur (110).

2. Système réchauffeur d'air (100) pour véhicule selon la revendication 1, comprenant, en outre, un moyen de détection de défaillance pour détecter une défaillance de l'élément de chauffage électrothermique (120) par détection d'une valeur de résistance de l'élément de chauffage électrothermique (120) sur la base d'une sortie correspondant au courant qui passe dans l'élément de chauffage électrothermique et qui est détecté via la borne de détection de courant de l'interrupteur à semi-conducteur (110).

3. Système réchauffeur d'air (100) pour véhicule selon l'une quelconque des revendications 1 ou 2, dans lequel le réchauffeur d'air (101) inclut une carcasse (130) qui contient l'élément de chauffage électrothermique (120) et à laquelle l'interrupteur à semi-conducteur (110) est fixé.

4. Système réchauffeur d'air pour véhicule selon la revendication 3, dans lequel :
l'élément de chauffage électrothermique (120) a une propriété de convergence de température telle qu'une température s'élève puis converge vers une température de convergence prédéterminée lorsque l'élément de chauffage électrothermique (120) est alimenté en continu avec la tension maximale autorisable,
la carcasse (130) inclut une pièce résineuse (132) faite de résine, et
la pièce résineuse (132) est agencée en un emplacement tel que la pièce résineuse a une rigidité convenant à son usage réel même lorsque l'élément de chauffage électrothermique (120) est à la température de convergence.

5. Système réchauffeur d'air (100) pour véhicule selon la revendication 3, dans lequel
l'élément de chauffage électrothermique (120) a une propriété de convergence de température telle qu'une température s'élève puis converge vers une température de convergence prédéterminée lorsque l'élément de chauffage électrothermique (120) est alimenté en continu avec la tension maximale autorisable,
la carcasse (130) inclut une pièce résineuse (132) faite de résine ayant une température de fléchissement prédéterminée sous charge, et
la pièce résineuse (132) est agencée en un emplacement tel que la température de la pièce résineuse reste au-dessous de la température de fléchissement sous charge même lorsque l'élément de chauffage électrothermique est à la température de convergence.

6. Système réchauffeur d'air (100) pour véhicule, comprenant :
un réchauffeur d'air (101) ayant un élément de chauffage électrothermique (120), et
un interrupteur à semi-conducteur (110) connecté en série à l'élément de chauffage électrothermique (120) pour commander l'alimentation en énergie de l'élément de chauffage électrothermique,
**caractérisé par**
un tableau de connexions (170) sur lequel est monté l'interrupteur à semi-conducteur (110),
le réchauffeur d'air (101) ayant une carcasse (130) qui contient l'élément de chauffage électrothermique, et
l'interrupteur à semi-conducteur (110) étant fixé à la carcasse via le tableau de connexions (170), l'interrupteur à semi-conducteur et le tableau de connexions étant couverts de résine.

7. Système réchauffeur d'air pour véhicule selon la revendication 6, dans lequel
l'interrupteur à semi-conducteur (110) a une fonction de protection contre la surchauffe pour interrompre le passage du courant au travers de l'interrupteur à semi-conducteur (110) lorsque la température de ce dernier devient une température de coupure, et
l'interrupteur à semi-conducteur (110) est fixé à la carcasse (130) en un emplacement tel que la température de l'interrupteur à semi-conducteur devient la température de coupure lorsque la température de l'élément de chauffage électrothermique atteint une valeur excessive.

8. Système réchauffeur d'air pour véhicule selon la revendication 7, dans lequel
la carcasse (130) du réchauffeur d'air inclut une pièce métallique (133), et
l'interrupteur à semi-conducteur (110) est fixé à la pièce métallique (133) de la carcasse, directement ou via un isolateur électrique (136).

9. Système réchauffeur d'air (100) pour véhicule selon la revendication 6, dans lequel
l'interrupteur à semi-conducteur (110) inclut une borne de sortie de signal de surchauffe qui émet un signal d'alerte de surchauffe lorsque la température de l'interrupteur à semi-conducteur (110) devient une température d'alerte,
l'interrupteur à semi-conducteur est fixé à la carcasse (130) en un emplacement tel qu'une température de l'interrupteur à semi-conducteur (110) devient la température d'alerte lorsque la température de l'élément de chauffage électrothermique atteint la température excessive, et le système réchauffeur d'air (100) inclut un moyen de protection contre la surchauffe pour interrompre le passage du courant au travers de l'interrupteur à semi-conducteur (110) en réponse au signal d'alerte de surchauffe provenant de la borne de sortie de signal de surchauffe de l'interrupteur à semi-conducteur.

10. Système réchauffeur d'air pour véhicule selon la revendication 9, dans lequel la carcasse (130) du réchauffeur d'air (101) inclut une pièce métallique (133) et
l'interrupteur à semi-conducteur (110) est fixé à la pièce métallique de la carcasse (130), directement ou via un isolateur électrique (136).

11. Système réchauffeur d'air pour véhicule selon la revendication 6, dans lequel
l'élément de chauffage électrothermique (120) a une propriété de convergence de température telle qu'une température s'élève puis converge vers une température de convergence prédéterminée lorsque l'élément de chauffage électrothermique (120) est alimenté en continu avec la tension maximale autorisable,
la carcasse (130) inclut une pièce résineuse (132) faite de résine, et
la pièce résineuse (132) est agencée en un emplacement tel que la pièce résineuse a une rigidité convenant à son usage réel même lorsque l'élément de chauffage électrothermique est à la température de convergence.

12. Système réchauffeur d'air pour véhicule selon la revendication 6, dans lequel
l'élément de chauffage électrothermique (120) a une propriété de convergence de température telle qu'une température s'élève puis converge vers une température de convergence prédéterminée lorsque l'élément de chauffage électrothermique est alimenté en continu avec la tension maximale autorisable,
la carcasse (130) inclut une pièce résineuse (132) faite de résine ayant une température de fléchissement prédéterminée sous charge, et
la pièce résineuse (132) est agencée en un emplacement tel que la température de la pièce résineuse reste au-dessous de la température de fléchissement sous charge même lorsque l'élément de chauffage électrothermique est à la température de convergence.

13. Unité de réchauffeur d'air (100) pour véhicule, l'unité comprenant :
un réchauffeur d'air (101) incluant un élément de chauffage électrothermique (120) et une carcasse (130) qui contient l'élément de chauffage électrothermique,
**caractérisée par**
un interrupteur à semi-conducteur (110) fixé à la carcasse du réchauffeur d'air (101) et connecté en série à l'élément de chauffage électrothermique (120) pour commander l'alimentation en énergie de l'élément de chauffage électrothermique, et
un tableau de connexions (170) sur lequel est monté l'interrupteur à semi-conducteur (110),
l'interrupteur à semi-conducteur (110) étant fixé à la carcasse (130) via le tableau de connexions (170), l'interrupteur à semi-conducteur et le tableau de connexions étant couverts de résine.

14. Unité de réchauffeur d'air pour véhicule selon la revendication 13, dans laquelle
l'interrupteur à semi-conducteur (110) a une fonction de protection contre la surchauffe pour interrompre le passage du courant au travers de l'interrupteur à semi-conducteur lorsque la température de ce dernier devient une température de coupure, et
l'interrupteur à semi-conducteur (110) est fixé à la carcasse (130) en un emplacement tel que la température de l'interrupteur à semi-conducteur (120) devient la température de coupure lorsque la température de l'élément de chauffage électrothermique (120) atteint une valeur excessive.

15. Unité de réchauffeur d'air pour véhicule selon la revendication 14, dans laquelle
la carcasse (130) du réchauffeur d'air inclut une pièce métallique (133), et
l'interrupteur à semi-conducteur (110) est fixé à la pièce métallique (133) de la carcasse (130), directement ou via un isolateur électrique (136).

16. Unité de réchauffeur d'air pour véhicule selon la revendication 13, dans laquelle
l'interrupteur à semi-conducteur (110) inclut une borne de sortie de signal de surchauffe qui émet un signal d'alerte de surchauffe lorsque la température de l'interrupteur à semi-conducteur devient une température d'alerte,
l'interrupteur à semi-conducteur (110) est fixé à la carcasse (130) en un emplacement tel que la température de l'interrupteur à semi-conducteur devient la température d'alerte lorsque la température de l'élément de chauffage électrothermique atteint la température excessive.

17. Unité de réchauffeur d'air pour véhicule selon la revendication 16, dans laquelle
la carcasse (130) du réchauffeur d'air inclut une pièce métallique (133) et
l'interrupteur à semi-conducteur (110) est fixé à la pièce métallique (133) de la carcasse, directement ou via un isolateur électrique (136).

18. Unité de réchauffeur d'air pour véhicule selon la revendication 13, dans laquelle
l'élément de chauffage électrothermique (120) a une propriété de convergence de température telle qu'une température s'élève puis converge vers une température de convergence prédéterminée lorsque l'élément de chauffage électrothermique est alimenté en continu avec la tension maximale autorisable,
la carcasse (130) inclut une pièce résineuse faite de résine, et
la pièce résineuse est agencée en un emplacement tel que la pièce résineuse a une rigidité convenant à son usage réel même lorsque l'élément de chauffage électrothermique est à la température de convergence.

19. Unité de réchauffeur d'air pour véhicule selon la revendication 13, dans laquelle
l'élément de chauffage électrothermique (120) a une propriété de convergence de température telle qu'une température s'élève puis converge vers une température de convergence prédéterminée lorsque l'élément de chauffage électrothermique est alimenté en continu avec la tension maximale autorisable,
la carcasse (130) inclut une pièce résineuse faite de résine ayant une température de fléchissement prédéterminée sous charge, et
la pièce résineuse est agencée en un emplacement tel que la température de la pièce résineuse reste au-dessous de la température de fléchissement sous charge même lorsque l'élément de chauffage électrothermique est à la température de convergence.
